# EUROPEAN PATENT APPLICATION

(11) **EP 4 432 054 A1**
(43) Date of publication of application: **18.09.2024**
(21) Application number: 22892553.3
(22) Date of filing: 21.10.2022
(51) Int. Cl.: G06F 3/02

(54) **INPUT DEVICE**

(30) Priority: 09.11.2021 US 202117522539
(71) Applicant: Sony Interactive Entertainment Inc., Tokyo 108-0075 (JP)
(72) Inventor: MORIMOTO, So, Tokyo 108-0075 (JP); TADANO, Katsuhisa, Tokyo 108-0075 (JP); BLACK, Glenn, San Mateo, California 94404 (US); KWUN, Arthur, San Mateo, California 94404 (US)
(74) Representative: Müller Hoffmann & Partner
(86) International application number: PCT/JP2022/039392
(87) International publication number: WO 2023/085053

(57) **Abstract**

To provide an input device that can make control comfortable for users who have difficulty in feeling comfortable controlling existing input devices. A controller (2000) includes a body (2100) of the controller (2000), a first control button (2110) having a top surface portion for placing a hand and attached to the body (2100), and a plurality of second control buttons (2120) arranged along an outer circumferential edge (C2) of the first control button (2110), and attached to the body (2100). The plurality of second control buttons (2120) have outer circumferential portions (2131) extending outward beyond an outer circumferential edge (C1) of the body (2100).

## Description

### [Technical Field]

The present disclosure relates to an input device.

### [Background Art]

PTL 1 described below discloses an input device used for control of a game console. Input devices used for applications such as games are used by users to input control signals to the applications.

### [Citation List]

### [Patent Literature]

[PTL 1]
PCT Patent Publication No. WO2014/061362

### [Summary]

### [Technical Problem]

There are also some users who have difficulty in feeling comfortable controlling existing input devices.

An object of the present disclosure is to provide a new input device that can make control comfortable for users who have difficulty in feeling comfortable controlling existing input devices.

### [Solution to Problem]

An input device according to the present disclosure includes a body, a first control button having a top surface portion for placing a hand and attached to the body, and a plurality of second control buttons arranged along an outer edge of the first control button and attached to the body. Outer circumferential portions of the plurality of second control buttons extend outward beyond an outer circumferential edge of the body. This can make control of the input device comfortable for users who have difficulty in feeling comfortable controlling existing input devices.

### [Brief Description of Drawings]

[FIG. 1]

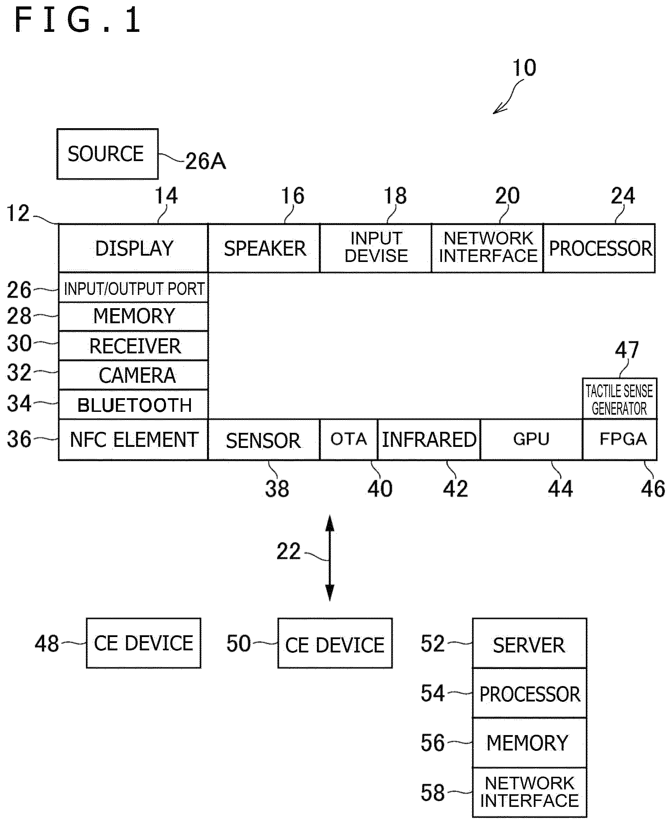

   FIG. 1 is a block diagram of a system example including an embodiment according to the present principles.
[FIG. 2]

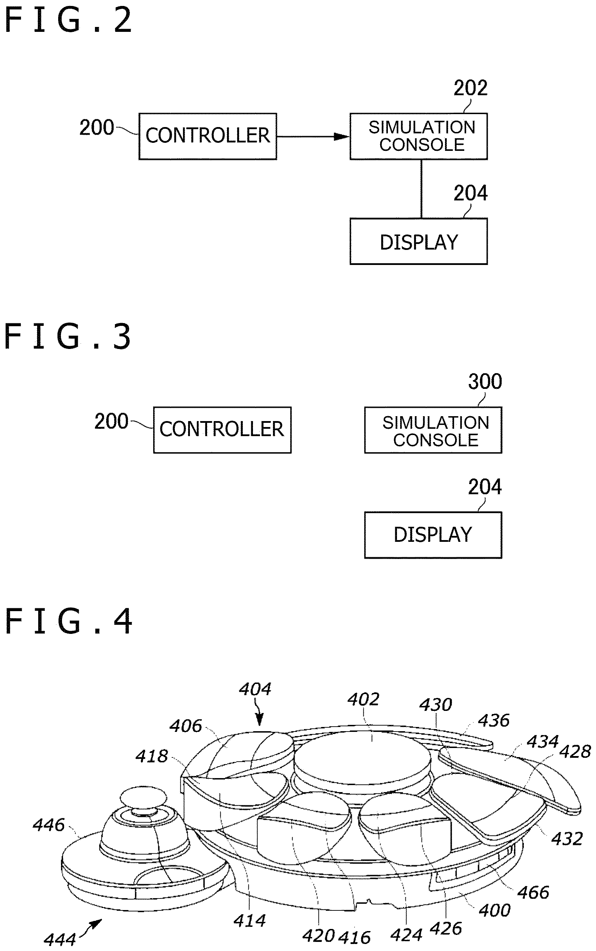

   FIG. 2 is a diagram depicting a first exemplary environment in which the present principles can be used.
[FIG. 3]
   FIG. 3 is a diagram depicting a second exemplary environment in which the present principles can be used.
[FIG. 4]
   FIG. 4 is a top-surface-portion perspective view of a controller in a state where an analog stick unit is at the proximate position.
[FIG. 5]

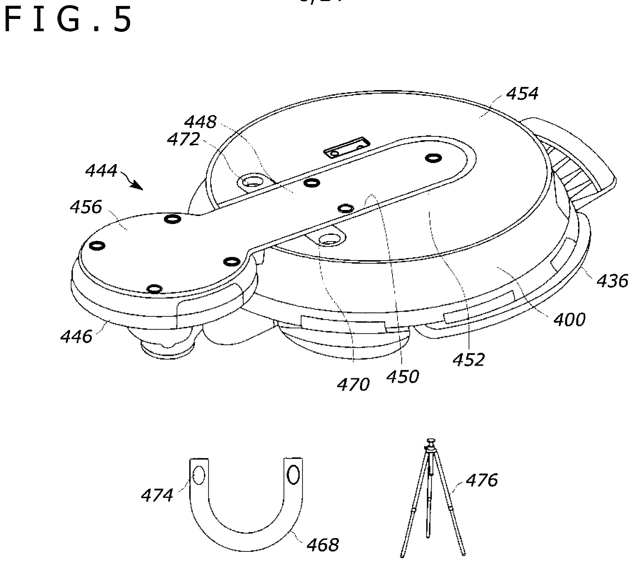

   FIG. 5 is a bottom-surface perspective view of the controller in a state where the analog stick unit is at the proximate position, and depicts attachment examples in a state where attachments are disassembled from a base portion.
[FIG. 6]

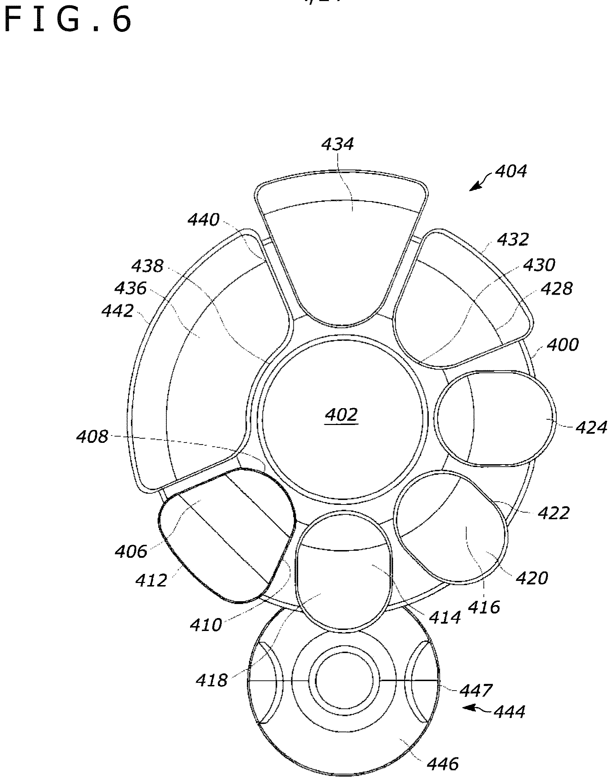

   FIG. 6 is a top-surface-portion view of the controller in a state where the analog stick unit is at the proximate position.
[FIG. 7]

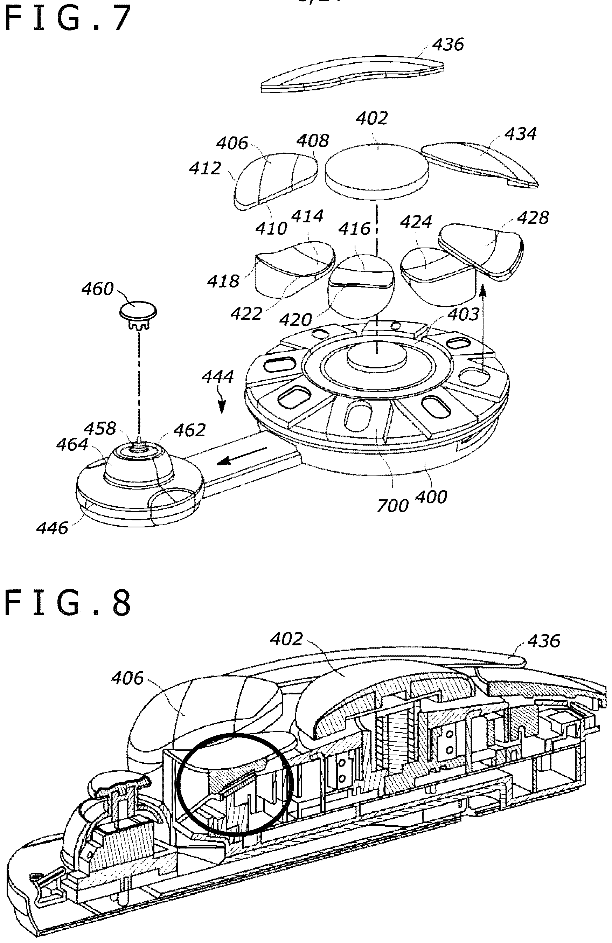

   FIG. 7 is an exploded top-surface-portion perspective view of the controller in a state where the analog stick unit is extended.
[FIG. 8]
   FIG. 8 is a sectional perspective view of the controller.
[FIG. 9]

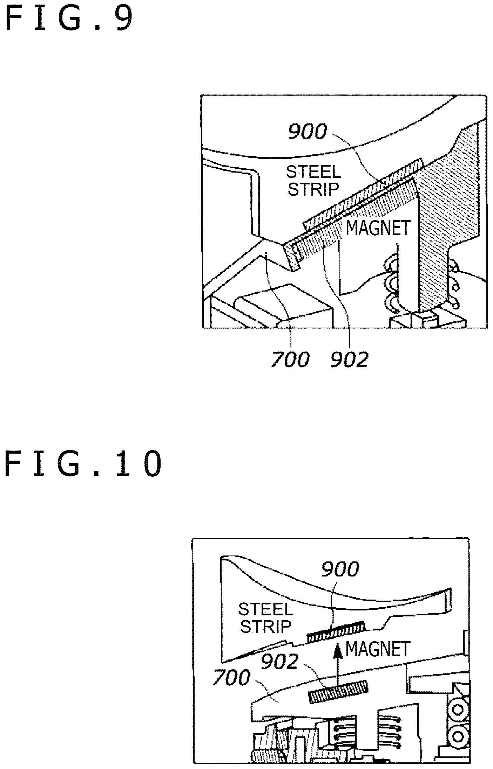

   FIG. 9 is a view depicting a control button mechanically coupled to a pad in a base portion, and depicting details of FIG. 8.
[FIG. 10]
   FIG. 10 is a detail view of FIG. 8 depicting a state where the control button is detached from the pad in the base portion.
[FIG. 11]

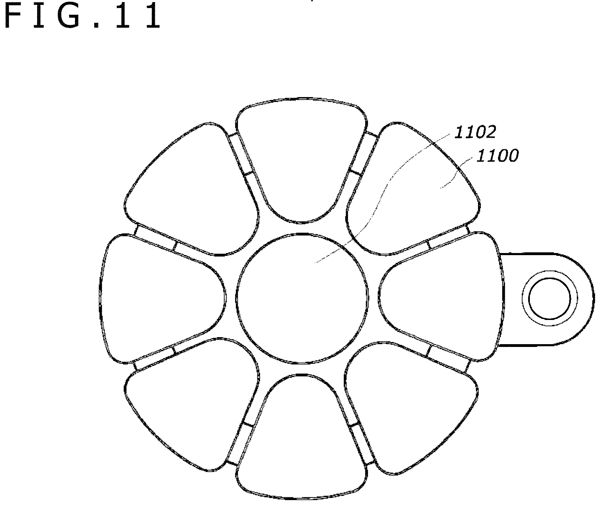

   FIG. 11 is a view depicting a button arrangement example.
[FIG. 12]

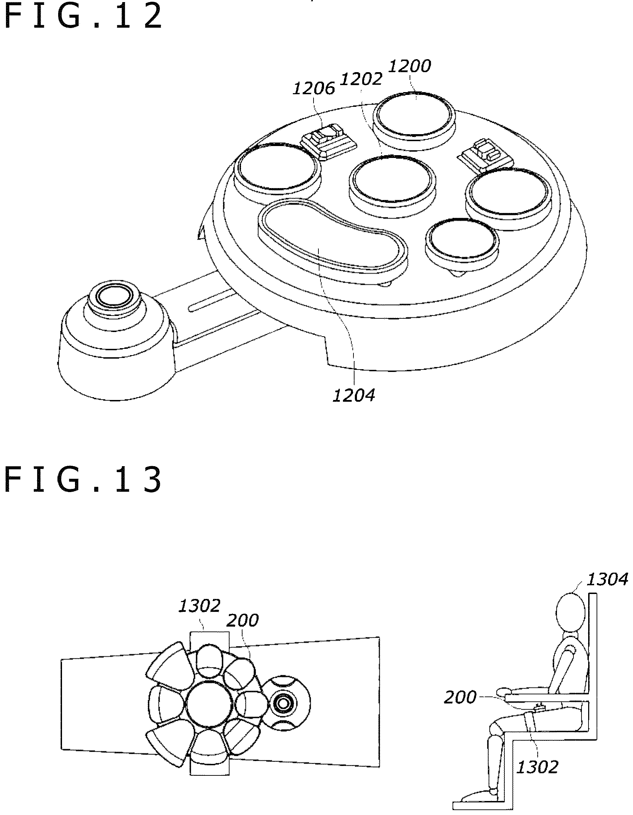

   FIG. 12 is a view depicting another alternative button layout example.
[FIG. 13]
   FIG. 13 is a view depicting an attachment in a case where the attachment is configured as a leg strap to connect the base portion and a user.
[FIG. 14]

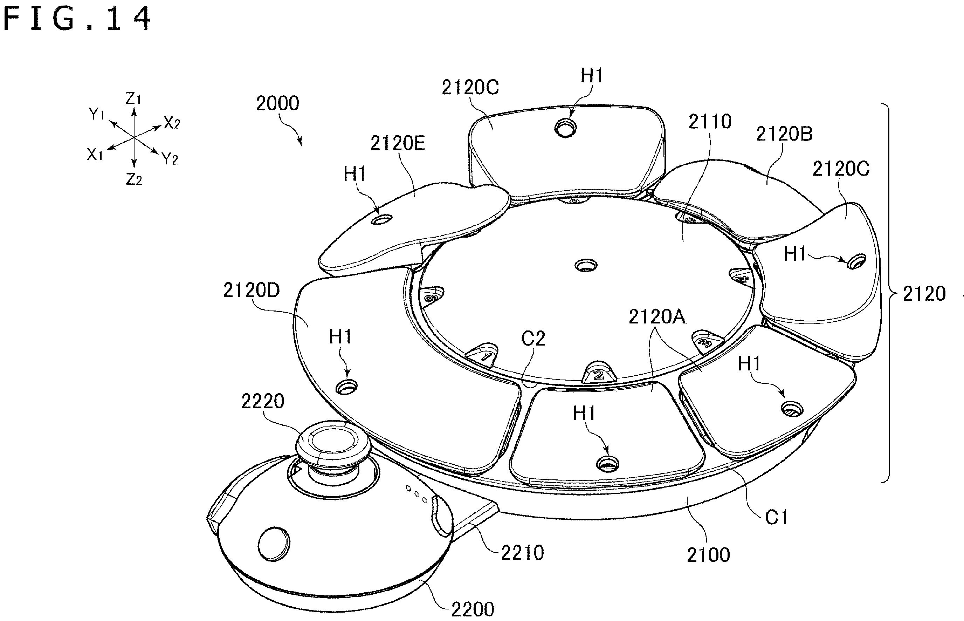

   FIG. 14 is a perspective view of a controller according to another embodiment (second embodiment).
[FIG. 15]

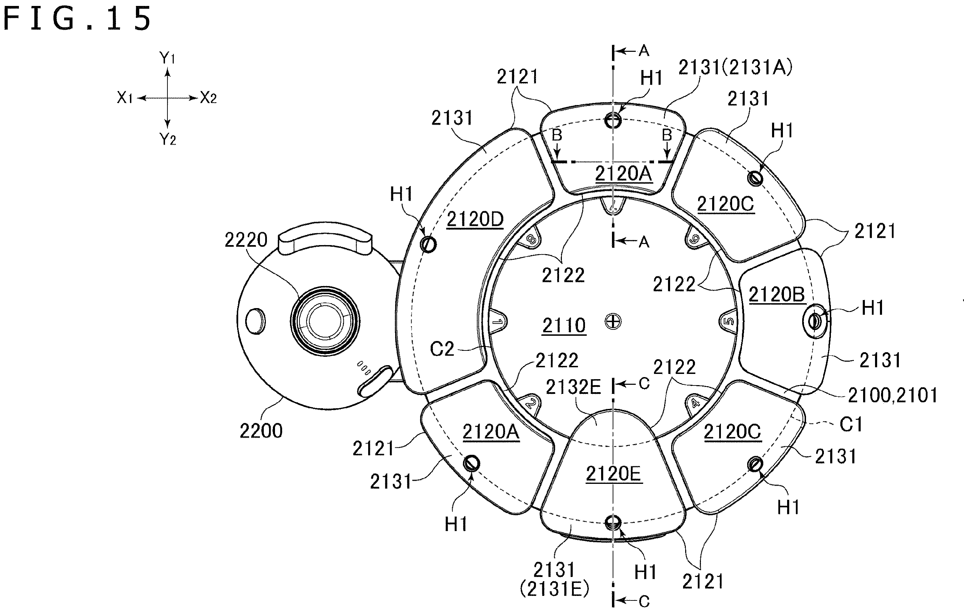

   FIG. 15 is a plan view of the controller.
[FIG. 16]

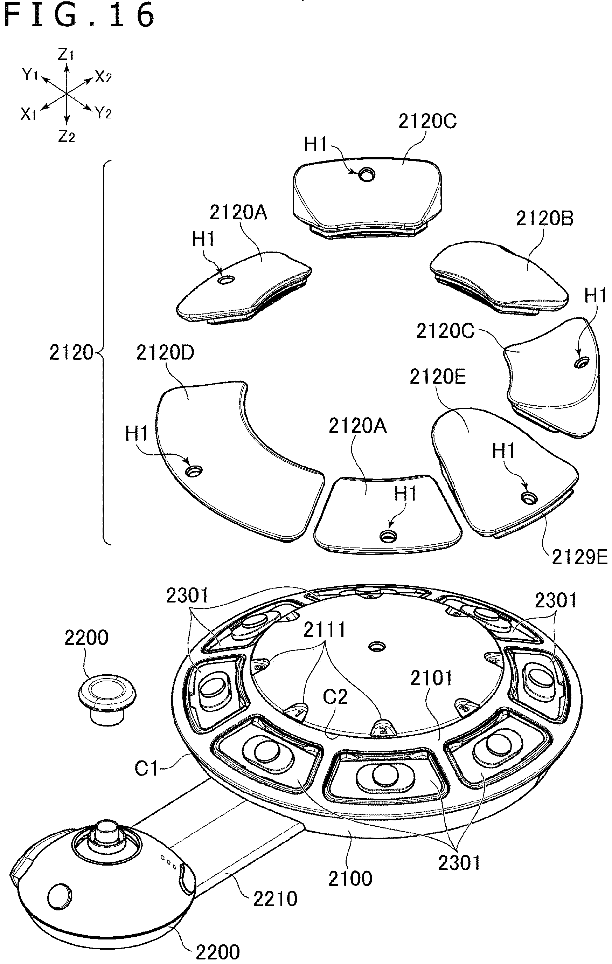

   FIG. 16 is an exploded perspective view depicting a state where a plurality of second control buttons and a control stick are disassembled from the controller.
[FIG. 17A]

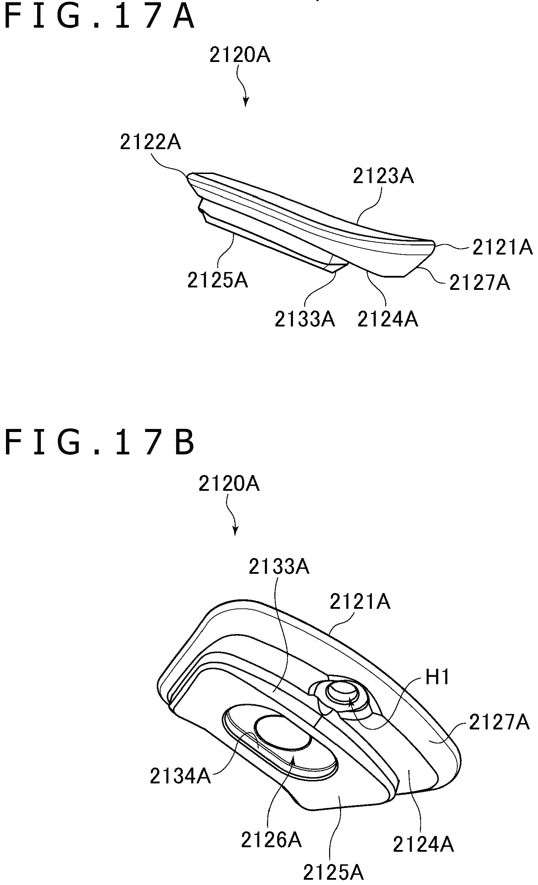

   FIG. 17A is a side view of a type-A second control button.
[FIG. 17B]
   FIG. 17B is a perspective view depicting a lower side of the type-A second control button.
[FIG. 18A]

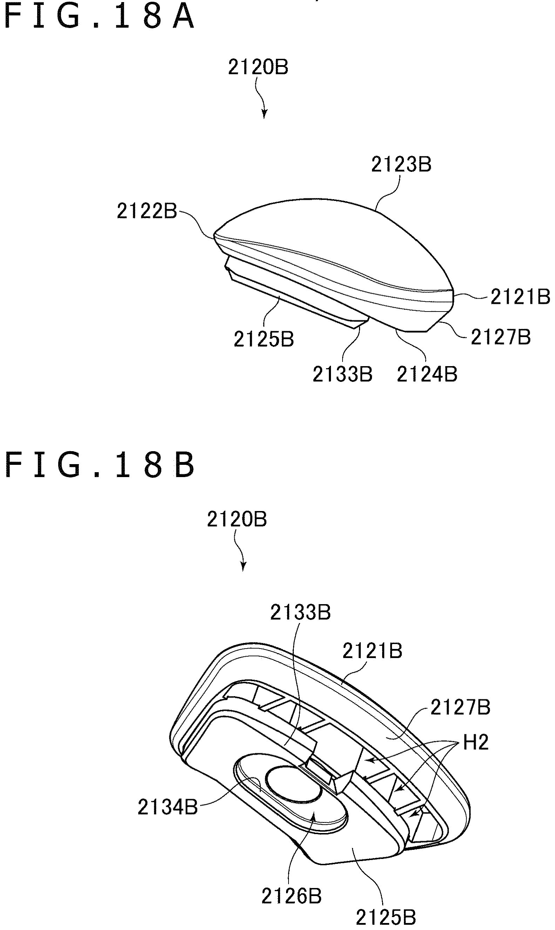

   FIG. 18A is a side view of a type-B second control button.
[FIG. 18B]
   FIG. 18B is a perspective view depicting a lower side of the type-B second control button.
[FIG. 19A]

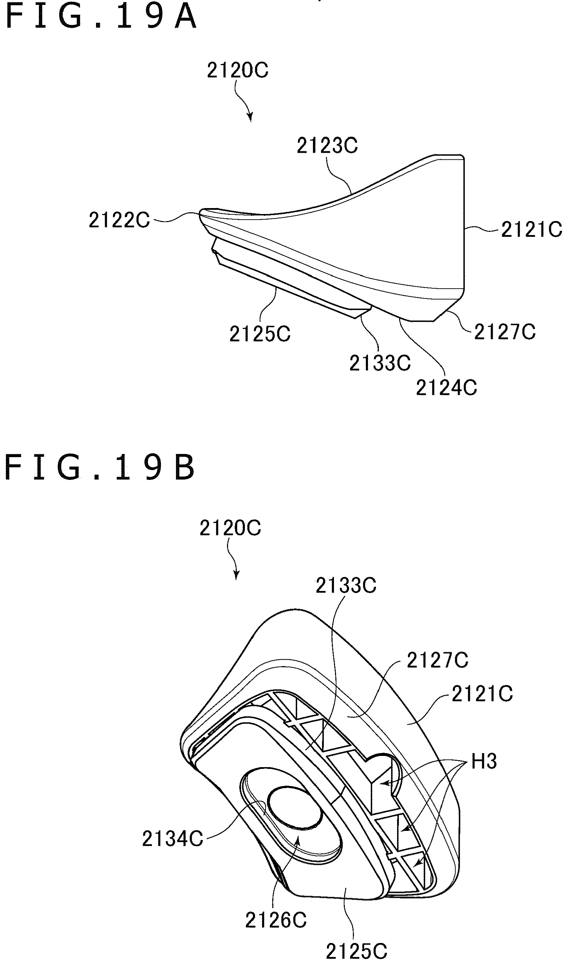

   FIG. 19A is a side view of a type-C second control button.
[FIG. 19B]
   FIG. 19B is a perspective view depicting a lower side of the type-C second control button.
[FIG. 20]

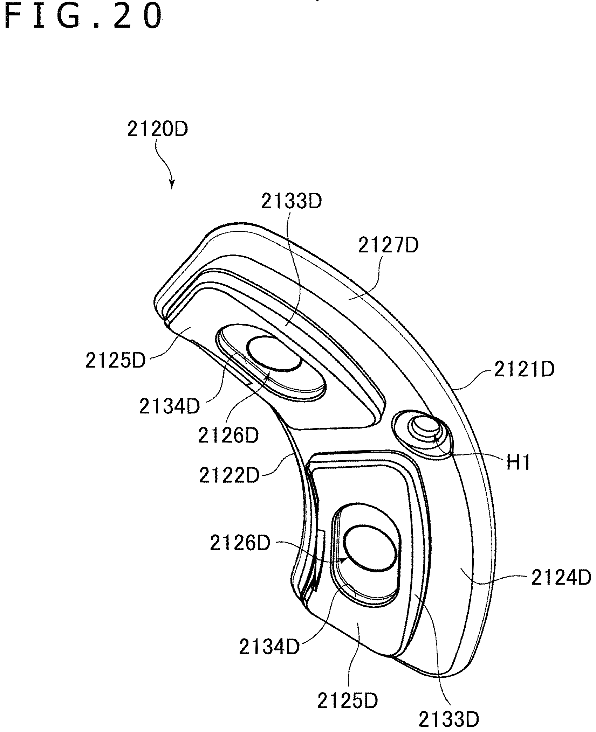

   FIG. 20 is a perspective view depicting a lower side of a type-D second control button.
[FIG. 21A]

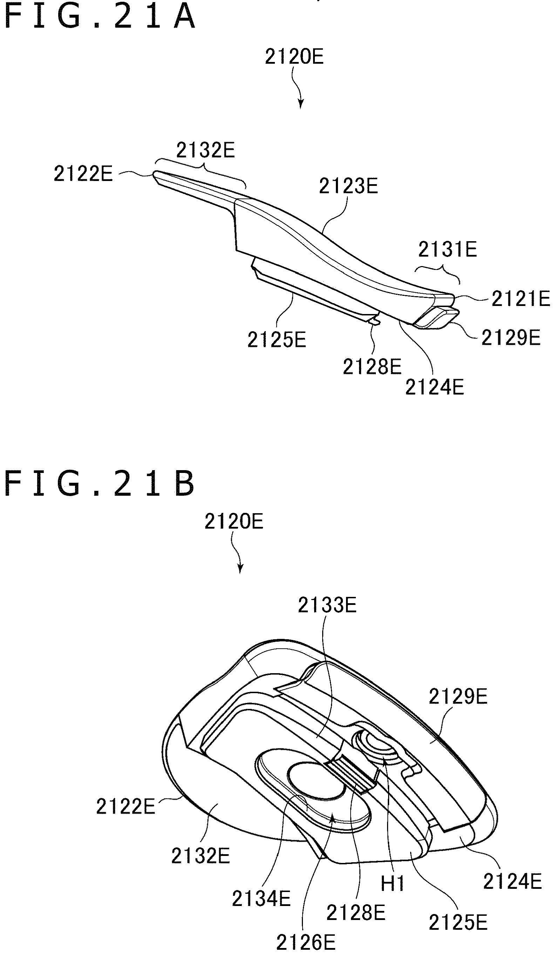

   FIG. 21A is a side view of a type-E second control button.
[FIG. 21B]
   FIG. 21B is a perspective view depicting a lower side of the type-E second control button.
[FIG. 21C]

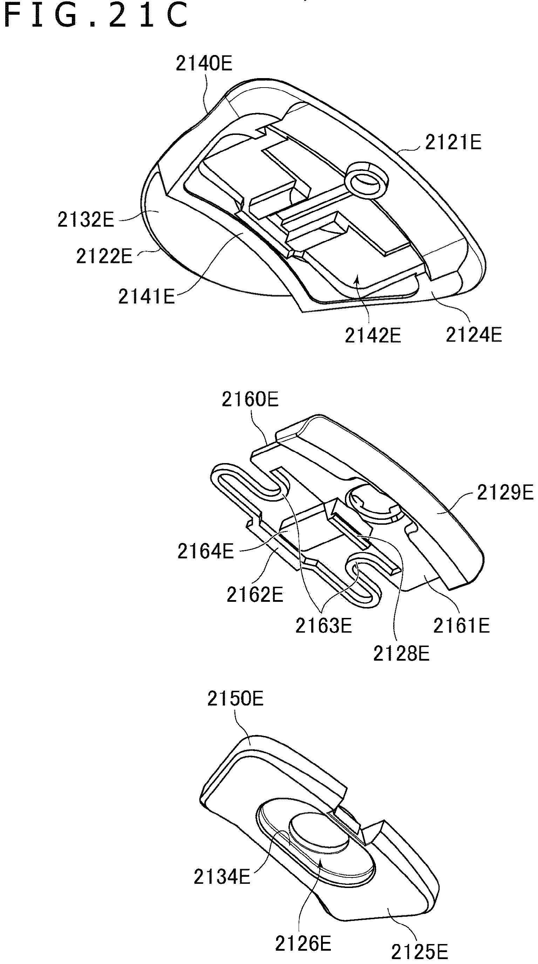

   FIG. 21C is an exploded perspective view of the type-E second control button.
[FIG. 22A]

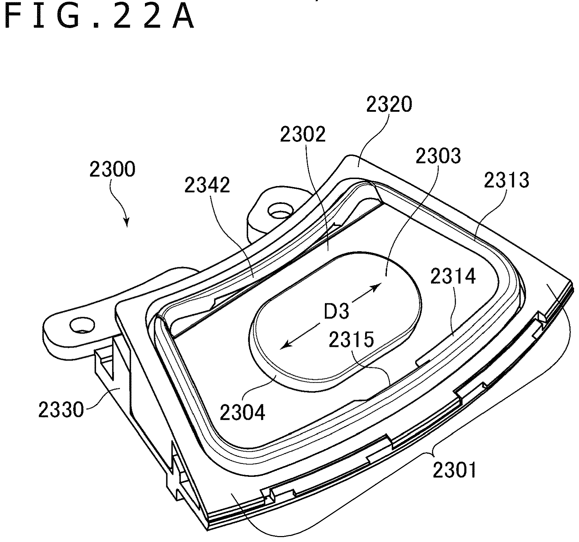

   FIG. 22A is a perspective view of a switch unit.
[FIG. 22B]

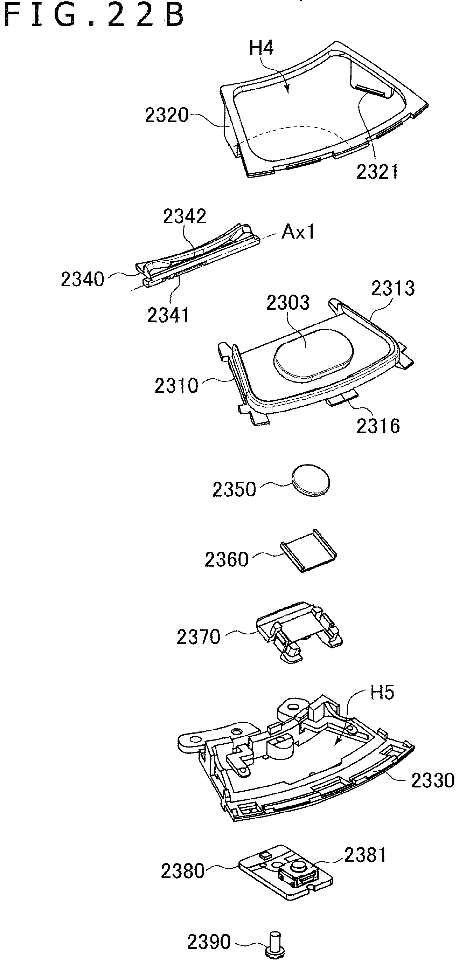

   FIG. 22B is an exploded perspective view depicting constituent elements of the switch unit.
[FIG. 23]

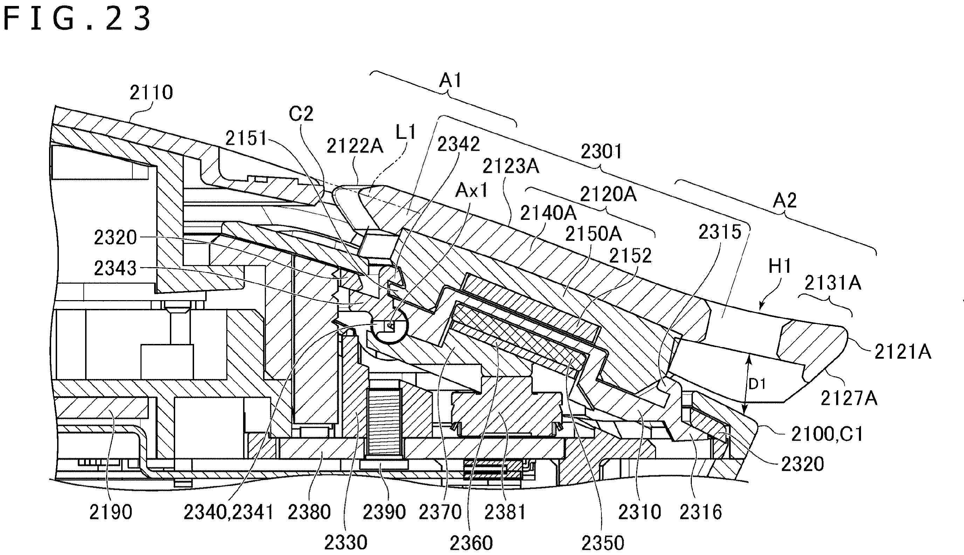

   FIG. 23 is a cross-sectional view taken along a line A-A in FIG. 15.
[FIG. 24]

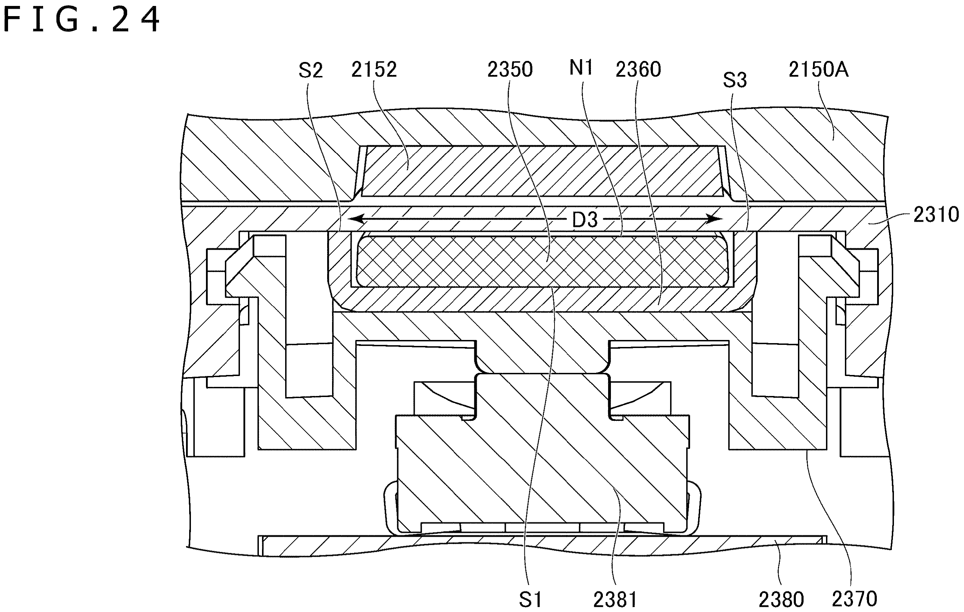

   FIG. 24 is a cross-sectional view taken along a line B-B in FIG. 15.
[FIG. 25]

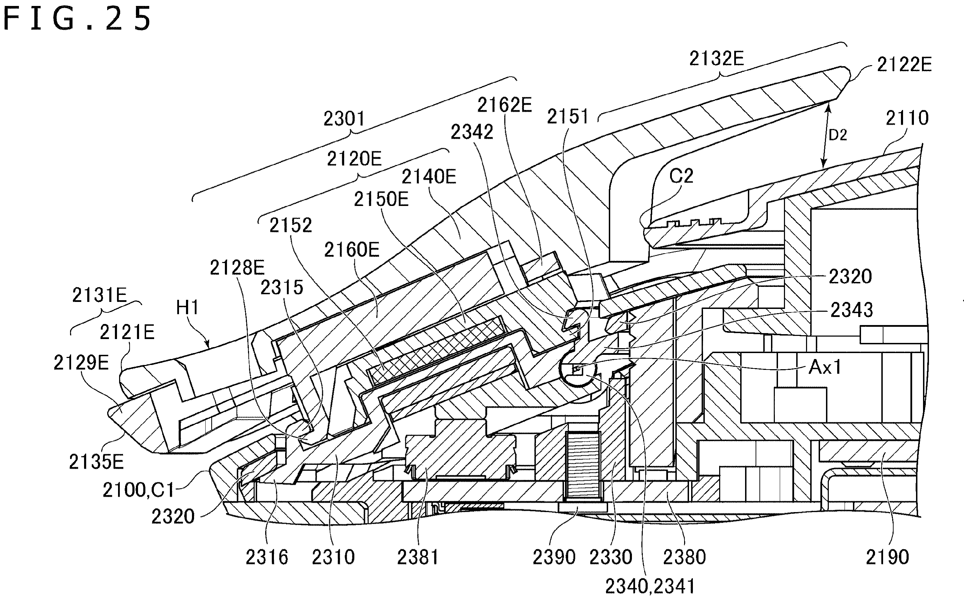

   FIG. 25 is a cross-sectional view taken along a line C-C in FIG. 15.
[FIG. 26A]

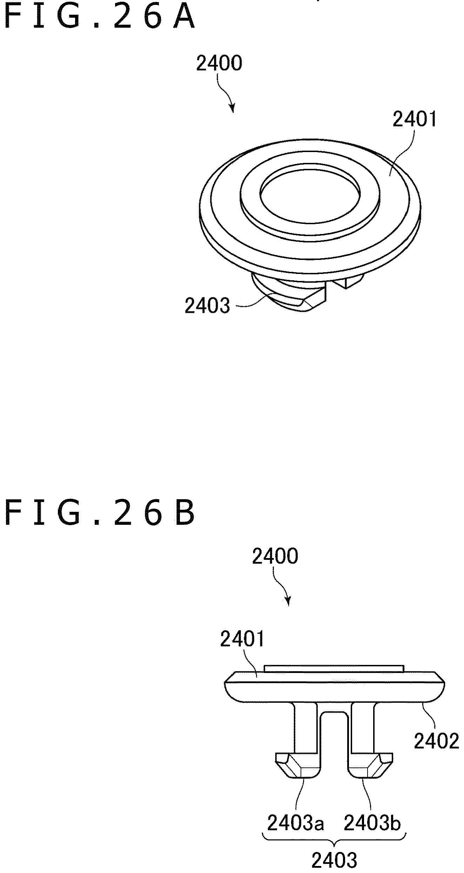

   FIG. 26A is a perspective view of an identification member.
[FIG. 26B]
   FIG. 26B is a side view of the identification member.
[FIG. 27]

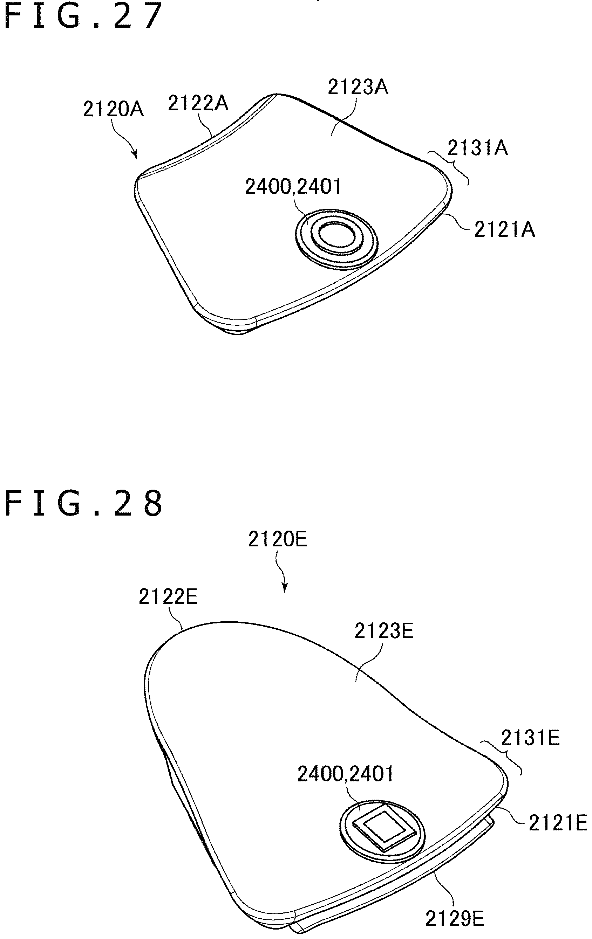

   FIG. 27 is a perspective view depicting the type-A second control button in a state where the identification member is attached thereto.
[FIG. 28]
   FIG. 28 is a perspective view depicting the type-E second control button in a state where the identification member is attached thereto.

### [Description of Embodiments]

### [Overview]

The present disclosure typically relates to a computer eco-system including an aspect of consumer electronics (CE) device networks not limited to computer game networks. The system in the present specification can include server and client components that are connected via a network such that data is exchanged between the client and server components. The client components can include one or more pieces of computing equipment such as game consoles such as Sony PlayStation (registered trademark), game consoles of Microsoft (registered trademark), Nintendo (registered trademark), or the like; virtual reality (VR) headsets, augmented reality (AR) headsets, portable televisions (smart televisions, Internet-enabled televisions, etc.), or portable computers (mobile equipment such as laptop personal computers or tablet terminals, additional equipment mentioned later such as smartphones). These client terminals may operate in various operating environments. For example, within the client computers, for example, Linux (registered trademark) or Unix (registered trademark) operating systems or operating systems manufactured by Microsoft (registered trademark), Apple (registered trademark), or Google (registered trademark) can be adopted. These operating environments can be used for executing one or more browsing programs such as browsers provided by Microsoft (registered trademark), Google (registered trademark), or Mozilla (registered trademark) that make it possible to access Web sites hosted by Internet servers mentioned later. In addition, an operating environment according to the present principles can be used for executing one or more computer game programs.

Servers and/or gateways can include one or more processors (those that are configured to allow the servers to receive and transmit data on networks such as the Internet). In addition, clients and servers can also be connected by a local intranet or a virtual private network. Servers and controllers can be embodied by game consoles such as Sony PlayStation (registered trademark), personal computers, or the like.

Information exchange is performed between clients and servers via networks, in some cases. Because of this, servers and clients can include network infrastructures for reliability and security such as firewalls, load balancers, transitory storage devises, or proxies. One or more servers can form an apparatus that implements a method of providing safe communities like online social websites to network members.

Processors include single-chip or multi-chip processors that can execute logic by various types of line such as address lines, data lines, or control lines, registers, and shift registers.

Constituent elements included in an embodiment can be used in any appropriate combination also in other embodiments. For example, any of various constituent elements described in the present specification and/or drawn in figures can be combined with another embodiment, replaced, or excluded.

As can be seen by referring to FIG. 1 specifically, an illustrative system 10 is depicted. The system 10 can include one or more of illustrative apparatuses that are mentioned above, and explained further below according to the principles of the present invention. A first illustrative apparatus included in the system 10 is a consumer electronics (CE) device such as an audio video device (AVD) 12 not limited to an Internet-enabled television with a television tuner (equivalently, a set top box that controls a television). Alternatively, the AVD 12 may be a computerized Internet-enabled device such as a smartphone, a tablet computer, a laptop computer, a head mounted display (HMD), a wearable computerized apparatus, a music player, a headphone, or a device that can be transplanted onto skin. Despite this, it will be understood that the AVD 12 is configured to be compliant with the principles of this document (e.g. communicate with another CE devise in order to be compliant with the principles of this document, execute logic described in this document, and execute any other functions and/or operations described in this document).

Accordingly, in order to realize such principles, the AVD 12 can be established with some or all of constituent elements depicted in FIG. 1. For example, the AVD 12 can include one or more displays 14. The displays 14 may be implemented by high-definition or ultra-high-definition flat screens with definition equal to or higher than "4K," and may support touch control for receiving user input signals via touch control on the displays. The AVD 12 can include one or more speakers 16 for outputting sound, and at least one additional input devise 18. The input devise 18 is a sound receiver, a microphone, or the like for inputting audible commands to the AVD 12 for controlling the AVD 12. The illustrative AVD 12 can also include one or more network interfaces 20. Under the control of one or more processors 24, the network interfaces 20 perform communication via at least one network 22 such as the Internet, a wide area network (WAN), or a local area network (LAN). Accordingly, although this is not the sole example, the interface 20 may be a Wi-Fi transceiver which is an example of a wireless computer network interface, and, for example, may be a mesh network transceiver. It will be understood that the processors 24 controls the AVD 12, e.g. controls the displays 14 to present images thereon, and receives inputs from the displays 14, in order to be compliant with the principles of this document including other elements of the AVD 12 described in the present specification. Furthermore, it should be noted that the network interfaces 20 may be other appropriate interfaces such as a wired or wireless modem or router, a wireless telephone transceiver, or a Wi-Fi transceiver mentioned above.

In addition to what was mentioned before, the AVD 12 can also include one or more input/output ports 26 such as a high-definition multi-media interface (HDMI (registered trademark)) port or a universal serial bus (USB) port for physical connection with other CE devises, and/or a headphone port for connecting a headphone to the AVD 12, and presenting sound from the AVD 12 to a user via the headphone. For example, the input/output ports 26 may be connected to an audio video content cable or satellite source 26a by wired or wirelessly. Accordingly, the source 26a may be a separate or integrated set top box or a satellite receiver. Alternatively, the source 26a may be a game console or a disc player on which content is stored. The source 26a in a case where it is implemented as a game console can include some or all of constituent elements mentioned later in relation to a CE devise 48.

The AVD 12 may further include one or more computer memories 28 such as a non-transitory signal disc-based or solid state storage. The AVD 12 may be included in the chassis of the AVD as a standalone device, or may be embodied as a personal video recording device (PVR) or a video disc player inside or outside the chassis of the AVD for reproducing AV programs or as a removable memory medium or a server mentioned later. In addition, in several embodiments, the AVD 12 can receive geographical positional information from a satellite or a mobile phone base station, and provide the information to the processors 24, and/or the AVD 12 can include a mobile phone receiver, a GPS receiver, and/or a position or position receiver such as an altimeter 30 that are arranged in relation to the processors 24, and configured to decide altitudes, but this is not the sole example. In addition, the components 30 can also decide the three-dimensional position and orientation of the AVD 12 by an inertial measurement unit (IMU) typically including a combination of an accelerometer, a gyroscope, and a magnetometer, or can also be implemented by an event-based sensor.

In several embodiments, the AVD 12 can include one or more cameras 32. The cameras 32 are a digital camera such as an infrared camera or a web camera, an event-based sensor, and/or a camera that can be integrated into the AVD 12, and controlled by the processors 24, and collects photographs/images, and/or videos according to the principles of this document. In addition, the AVD 12 may include each of a Bluetooth transceiver 34 and another NFC element 36 for communication with another apparatus that uses the Bluetooth (registered trademark) and/or near field communication (NFC) technologies. Examples of the NFC element include a radio frequency identification (RFID) element.

Furthermore, the AVD 12 can include one or more auxiliary sensors 38 that provide inputs to the processors 24 (e.g. a motion sensor such as an accelerometer, a gyroscope, a cyclometer, or a magnetic sensor, an infrared (IR) sensor, an optical sensor, a speed and/or cadence sensor, an event-based sensor, a gesture sensor (e.g. for sensing gesture commands)). The AVD 12 may include an over-the-air (OTA) television broadcast port 40 for receiving OTA television broadcasts to provide inputs to the processors 24. It should be noted that, in addition to what was described above, the AVD 12 can include also an infrared (IR) transmitter, an IR receiver, and/or an IR transceiver 42 such as an IR data association (IRDA) device. A battery (not depicted) may be provided for supplying electric power to the AVD 12, and similarly may be a mobile environment power generating apparatus that can convert kinetic energy into electric power for charging a battery and/or supplying electric power to the AVD 12. In addition, a graphics processing unit (GPU) 44 and a field programmable gate array (FPGA) 46 may be included. One or more tactile sense generators 47 may be provided for generating tactile signals that can be sensed by a human holding or touching a device.

As can be seen by referring to FIG. 1, in addition to the AVD 12, the system 10 may include one or more other types of CE devise. For example, a first CE devise 48 may be a computer game console that can be used to send sounds and videos of a computer game to the AVD 12 via a command directly sent to the AVD 12 and/or via a server mentioned later, and a second CE devise 50 may include components similar to those of the first CE devise 48. In the example depicted in the figure, the second CE devise 50 may be configured as a computer game controller to be controlled by a player, or may be configured as an HMD to be worn by a player. It is understood that, whereas only the two CE devises are depicted in this example, fewer devices or more devices can be used. An apparatus in the present specification can implement some or all of constituent elements depicted about the AVD 12. Any constituent element depicted in the following figures may incorporate some or all of the constituent elements depicted about the AVD 12.

At least one server 52 mentioned before includes at least one server processor 54, at least one tangible computer-readable storage medium 56 such as a disc-based or solid state storage, and at least one network interface 58 that enables communication with another apparatus in FIG. 1 via the network 22 under the control of the server processor 54, and can make easier communication between the server and a client apparatus according to the principles of this document actually. It should be noted that the network interface 58 may be, for example, a wired or wireless modem or router, a Wi-Fi transceiver, or another appropriate interface like a wireless telephone transceiver, for example.

Accordingly, in several embodiments, the server 52 may be an Internet server or an entire server "firm," and can include and execute "cloud" functions such that devices of the system 10 can access a "cloud" environment via the server 52 in an illustrative embodiment for a network game application, for example. Alternatively, the server 52 may be realized by one or more game consoles or another computer in the same room as another apparatus depicted in FIG. 1 or near the room.

Constituent elements depicted in the following figures include some or all of constituent elements depicted in FIG. 1, in some cases.

FIG. 2 depicts that a controller 200 according to the principles of this document can be used for inputting control signals to a computer simulation console 202 in order to control display on a display 204 of a computer simulation executed on the console 202. For example, the display 204 may be a television, an HMD (Head Mounted Display), or another display.

FIG. 3 is a diagram depicting that the controller 200 according to the present principles inputs a control signal to a computer simulation server 300 that can be implemented by the server 52 in FIG. 2, for example, and a computer simulation is executed on the server 300, and is streamed to the display 204. The simulation may be directly streamed to the display 204 by the server 300, or may be streamed via the simulation console 202 depicted in FIG. 2.

### [Example of Controller (First Embodiment)]

Next, a detailed example of the controller 200 depicted in FIG. 2 and FIG. 3 is explained with reference to FIG. 4 to FIG. 10. Individual constituent elements of the controller 200 mentioned later may be formed of injection-molded plastics, inkjet-printed plastics including ones that can be manufactured by a manufacturer or an end user, composite materials, metals, plastics which are combinations of them, or the like.

In the example depicted in the figure, a base portion 400 having a circular peripheral portion supports, at its top portion, a plurality of control buttons including a central control (CC) button 402. The CC button 402 can operate to send signals to a computerized apparatus such as the server 300 in FIG. 3 or the simulation console 202 in FIG. 2 when the apparatus is communicating with the controller through a wire and/or wirelessly. The CC button 402 in the non-limiting example depicted in the figure may have a circular, and gently projection top surface portion. The shape of the CC button 402 may be another shape.

In the illustrative embodiment, the CC button 402 has two functions as a normal control button, and an armrest or a palm rest. Note that in a case where the CC button 402 is used as an armrest or a palm rest, the CC button 402 may have a lock mechanism for stopping upward/downward movement.

A circular light-emitting section 403 (see FIG. 7) is arranged around the central button, and is devised such that the light-emitting section can be seen from any direction. One or more light emitting diodes (LEDs) or other light sources may be arranged under the transparent or semi-transparent portion 403, and light to be propagated through the portion 403 may be provided.

A plurality of peripheral control (PC) buttons 404 surround the circular light-emitting section 403, and accordingly surround the CC button 402 as depicted in the figure. In the non-limiting example depicted in the figure, the PC buttons 404 completely surround the CC button 402 leaving only small spaces between the adjacent PC buttons 404. The PC buttons 404 may have mutually different shapes, sizes, colors, and textures. Some of the PC buttons 404 may have identical colors and textures, when desired. Each PC button can operate to transmit signals to a computerized apparatus when the computerized apparatus is communicating with the apparatus.

As depicted in FIG. 4 and FIG. 6, one or more of the PC buttons 404 may have outer edge portions overhanging the base portion 400 (extending radially outward beyond the peripheral portion) in order to make it easier to replace the buttons with one finger or an elbow. Accordingly, end portions of the tops of the PC buttons may have shapes protruding from an end portion of the controller base portion 400.

In the non-limiting example depicted in the figure, a first PC button 406 in a top view includes, when seen from above, a curved inner circumferential portion 408 closest to the CC button 402, and side surfaces 410 that spread outward, and are curved slightly or straight toward an outer circumferential portion 412. The outer circumferential portion 412 is larger (longer) than the inner circumferential portion 408. The first PC button 406 has a flat top surface portion or a gently projection top surface portion, and may incline from the middle of the top surface portion in dimensions in both the radial direction (the dimension from the middle of the controller toward the outer edge of the controller) and the orientation direction.

In the non-limiting example depicted in the figure, there is a second PC button 414 adjacent to the first PC button 406, and there is a third PC button 416 that is adjacent to the second PC button 414, and may have identical configuration and size as the second PC button 414. Unlike the first PC button 404, the second and third PC buttons 414 and 416 have upwardly-inclined outside regions 418 and 420, respectively. Instead of having side surfaces that spread outward from their respective inner circumferences toward the respective outer circumferences, the inner circumferences and the outer circumferences of the second and third PC buttons 414 and 416 have substantially the same lengths. Side surfaces 422 of the second and third PC buttons 414 and 416 may be straight, and form race-track-like circumferential edges of the respective PC buttons together with the inner circumferences and the outer circumferences. Alternatively, the side surfaces 422 may be gently projection, and form egg-shaped outer circumferences of the respective PC buttons together with the inner circumferences and the outer circumferences.

It will be understood that the second and third PC buttons 414 and 416 have the upwardly-inclined outside regions 418 and 420, respectively, and these essentially represent discontinuity of the inclinations at ends of downwardly-inclined inside regions.

In the non-limiting example depicted in the figure, a fourth PC button 424 is positioned next to the third PC button 416, and may have the same configuration as the second and third buttons 414 and 416 in terms of the same top surface portion shape, and upwardly-inclined outside region 426.

In the non-limiting example depicted in the figure, a fifth PC button 428 is positioned next to the fourth PC button 424, and may have a contour that is flat or gently and continuously downwardly-inclined from a projection inner circumferential surface 430 of the fifth PC button 428 closest to the CC button to a projection outer circumferential surface 432.

In the non-limiting example depicted in the figure, a sixth PC button 434 is positioned next to the fifth PC button 428, and may be configured with an identical shape as the fifth PC button 428, but may have a size larger than the fifth PC button 428.

In the non-limiting example depicted in the figure, a seventh PC button 436 may be positioned between the sixth PC button 434 and the first PC button 406 as depicted in the figure, and may be larger than other PC buttons. As depicted in FIG. 6, the seventh PC button 436 has a recess inner circumferential surface 438 in contrast to other PC buttons that may have projection inner circumferential surfaces, and the seventh PC button 436 may have straight side surfaces 440 that spread outward extending from the inner circumferential surface 438 to a projection outer circumferential surface 442.

One or more of the PC buttons 404, all the PC button 404 in the example depicted in the figure, may be freely removably engaged with the base portion 400. In a particular non-limiting example like the one depicted in FIG. 7, each PC button 404 can removably engage with each pad 700 on the base portion 400. The removable engagement may be friction or snap-fits between the PC buttons 404 and the respective pads 700, or the engagement may be magnetic engagement as depicted in FIG. 9 and FIG. 10. Specifically, as depicted in FIG. 9 and FIG. 10, each of the buttons 402 and 404 may be coupled to a ferromagnetic plate 900 (steel, etc.) such that the button engages with a magnet 902 in each pad 700 magnetically. It is understood that the magnets are positioned on the buttons, and the ferromagnetic plates are positioned on the pads of the base portion, in some cases.

Accordingly, button covers can be moved to different basic controls on the base portion 400. In addition, functions of the controls themselves also can be defined by a user.

Each of the buttons 402 and 404 may have a unique color different from other buttons. Alternatively, some buttons, the buttons 402 and 404, may have a first color, and one or more other buttons may have colors different from the first color. For example, all the second to fourth buttons 414, 416, and 424 may have the same color, and the color may be different from the colors of the other buttons. One or more buttons may have braille patterns formed thereon projecting on top portions of the buttons by embossing or another method in order to help visually impaired people identify the buttons.

A top surface portion of each of the buttons 402 and 404 to be touched by a user may have a unique texture different from other buttons. Alternatively, some buttons, the buttons 402 and 404, may have a first texture, and one or more other buttons may have textures different from the first texture. For example, all the second to fourth buttons 414, 416, and 424 may have the same texture, and the texture may be different from the textures of the other buttons. For example, the first texture may be a smooth texture, and, for example, the second texture may be a coarse texture, a lined texture,
a dimpled texture, or another tactilely distinguishable texture.

Button shapes other than those described above also can be used. A plurality of buttons different from those described above also can be used. This recognition is part of the invention principles of this document, and does not constitute part of the technologies in the past.

FIGS. 4 to 7 are referred to again. In addition to a plurality of the control buttons 402 and 404 that are arranged on the base portion 400, and can operate to send signals to a computerized apparatus when the computerized apparatus is communicating with the apparatus, an analog stick unit (ASU) 444 is included. The ASU 444 is engaged with the base portion 400 such that a control portion 446 of the ASU 444 can move between a proximate position (FIGS. 4 to 6) at which the control portion 446 is arranged next to and in close proximity to the base portion 400, and an extension position (FIG. 7) at which the control portion 446 is apart from the base portion 400. Furthermore, as explained in another location in the present specification, the control portion 446 can rotate relative to the base portion 400. In both the proximity configuration and the extension configuration, and in various angle directions, the control portion 446 can be controlled in order to input control signals to a computerized apparatus.

The control portion 446 may be a joystick-type input devise. The "north" of the control portion 446 may be defined at the factory, or may be defined by a user. For example, the "north" may be defined such that a user's need is met most by using a user interface that permits the user to define which radial direction of the ASU 444 should be defined as the "north."

An additional control key 447 may be provided next to the control portion 446 in the ASU 444 as depicted in the figure for control for generating additional control signals for game play.

As depicted in FIG. 5, the ASU 444 includes a flat-plate-like platform including a slide 448. The slide 448 faces a parallel side surface 450 of the base portion 400, and slidably engages with a receiving portion 452 of the base portion 400 (e.g. slidably engages with a flat-plate-like base-portion plate 454). It will be understood that the receiving portion 452 is on the bottom surface of the base portion 400, and the control buttons 402 and 404 are at the top portion of the base portion.

In addition, the flat platform may include, at one end of the slide 448, a disc-like support portion 456 to which the control portion 446 is attached rotatably. In the example depicted in the figure, both the support portion 456 and the control portion 446 are circular, and have substantially the same diameter. The support portion 456 and the slide 448 may be formed of an integrated material such as a plastic. In addition, a separate structure combining an anti-slip rubber part and a plastic part can also be adopted.

The control portion 446 can be controlled to generate signals to a computerized apparatus. In a non-limiting example, as best depicted in FIG. 7, the control portion 446 can include a point-and-click apparatus which is, in the example depicted in the figure, a button 458 and a button cover 460 to be pressed down to generate signals. As depicted in the figure, the button 458 is attached on a rotatable ball 462 in a round socket 464 that protrudes upward at the center of the control portion 446.

The button cover 460 has a relatively large size, and may have a strap hole for receiving a fastening strap or a carrying strap formed at its top portion.

Regarding electrical connectors associated with the ASU 444, all connectors 466 (see FIG. 4) not limited to a USB connector may be arranged on a side opposite to the analog stick unit in order to avoid interference of a cable in control of the analog stick by a user. Since a USB cable is the thickest in cables that are expected to be connected to the equipment and may influence the posture at the time of use, the USB connector may be arranged on a side 180 degrees opposite to the analog stick.

In addition, since a digital audio connector and an analog audio connector have the same visual appearances, they are arranged on both sides of the USB connector so as to make them distinguishable, in some cases. In several embodiments, a flexible buckle attachment 468 (see FIG. 5) formed of a soft material such as silicon, rubber, or an elastic member can be attached to the rear surface of the base portion 400. Since, due to its flexibility, the buckle attachment deforms along an attached portion such as a user's foot or arm, or an arm of a wheelchair, stable attachment is possible.

In the example depicted in the figure, as depicted in FIG. 5, two screw holes 470 may be formed through the bottom surface or another surface of the base portion 400. Each connector 472 may pass through a hole 474 of the attachment 468, engage with a hole 470 of the base portion 400, and hold the base portion and the attachment together. Another attachment like a tripod 476 also can be engaged with the base portion 400 similarly.

### [Another Example of Controller (Modification Example)]

FIG. 11 depicts an alternative button layout in which eight peripheral buttons 1100 surround a round center button 1102. The peripheral buttons 1100 may have identical shapes and sizes, and, in the example depicted in the figure, may have the shape of the first PC button 406 depicted in FIG. 4. Note that in the present embodiment and other embodiments, buttons may be arranged left-right symmetrically along a circumferential edge portion of the base portion.

FIG. 12 depicts an alternative button layout in which peripheral buttons 1200 surround a round center button 1202. Some or all of the peripheral buttons 1200 may have identical shapes such as circular shapes and identical sizes. In the example depicted in the figure, four of the peripheral buttons 1200 are round, one of the round peripheral buttons is smaller than the other three peripheral buttons, and one (denoted with 1204) of the peripheral buttons is oval, and curved in the azimuth direction as depicted in the figure. Two (denoted with 1206) of the peripheral buttons may be small, flat, and straight buttons.

FIG. 13 is a view depicting the controller 200 according to the principles of this document engaged with an attachment 1302. The attachment 1302 has flexibility and is a leg band or a strap that can fix the controller 200 to a leg or another portion of a user 1304. For example, attachment can be performed effectively by using fixing members and screw holes at the base portion of the controller as mentioned above such that the controller 200, when attached to a thigh of the user, faces only one or two directions.

In an embodiment, two controllers are provided, one may be configured for optimal control by one hand of a user, and the other may be configured for optimal control by the other hand of the user.

### [Another Example of Controller (Second Embodiment)]

Next, other detailed examples of a controller which is the input device according to the principles of this document are explained with reference to FIG. 14 to FIG. 28. FIG. 14 is a perspective view of a controller 2000, and FIG. 15 is a plan view of the controller 2000. The controller 2000 depicted in FIG. 14 and FIG. 15 also can be used for inputting control signals to the console 202 or the server 300 similarly to the controller 200 mentioned above. Individual constituent elements of the controller 2000 mentioned later also may be formed of resin such as plastic, metal, a composite material of them, or the like.

In the following explanation, the X1 direction and the X2 direction along the X axis (the direction in which a body 2100 and a stick unit 2200 mentioned later are arrayed) depicted in FIG. 14 and the like are treated as the right direction and the left direction, respectively. In addition, the Y1 direction and the Y2 direction along the Y axis perpendicular to the X axis are treated as the forward direction and the backward direction, respectively. In addition, the Z1 direction and the Z2 direction along the Z axis (the direction of extension of a control stick 2220 mentioned later) perpendicular to the X axis and the Y axis depicted in FIG. 3 and the like are treated as the upward direction and the downward direction, respectively. Note that these directions and arrangement positions are specified for explaining the shapes and relative positional relations of elements (parts, members, and portions) of the controller 2000, and are not for limiting the posture of the controller 2000.

As depicted in FIG. 14, the controller 2000 has the body 2100 (base portion) which is the body of the controller 2000, and on which a plurality of control buttons are arranged, and a stick unit 2200 (analog stick unit) connected to the body 2100. In a direction (in the example depicted in FIG. 14, the leftward/rightward direction) perpendicular to the upward/downward direction, the stick unit 2200 is arranged next to the body 2100. For example, the body 2100 and the stick unit 2200 may be arranged on a predetermined horizontal surface such as a floor, a desk, or a thigh of a user. The stick unit 2200 has a slide portion 2210 that extends in the leftward/rightward direction (the direction perpendicular to the upward/downward direction), and is connected to the body 2100. The stick unit 2200 has a dome-like shape that bulges upward as a whole, and has the control stick 2220 at a top portion positioned at its central portion.

The body 2100 has, at its bottom portion, a housing recess portion (not depicted) that houses the slide portion 2210, and the slide portion 2210 can move in its direction of extension relative to the housing recess portion. Thereby, the stick unit 2200 can move in the direction of extension of the slide portion 2210 relative to the body 2100. The stick unit 2200 includes a circuit board (not depicted) for detecting motions of the control stick 2220, and the body 2100 includes a first circuit board 2190 (see FIG. 23) and a plurality of second circuit boards 2380 (see FIG. 22B and FIG. 23) for detecting press-control of a plurality of control buttons attached to the body 2100. The first circuit board 2190 and the plurality of second circuit boards 2380 are electrically connected by wires which are not depicted.

As depicted in FIG. 14 and FIG. 15, the body 2100 of the controller 2000 has thereon a first control button (central control button) 2110 which serves as a control portion to be controlled by a user, and a plurality of second control buttons 2120 (peripheral control buttons) (type-A to type-E second control buttons 2120A to 2120E mentioned later) that serve as control portions to be controlled by the user. The body 2100 is circular in a plan view, and the first control button 2110 and the plurality of second control buttons 2120 are attached onto the body 2100. The first control button 2110 also is circular in a plan view. The first control button 2110 is provided at a central portion of the body 2100. As depicted in FIG. 15, a portion of the outer surface (top surface portion 2101) of the body 2100 is exposed outside an outer circumferential edge C2 of the first control button 2110. The first control button 2110 has a top surface portion larger than the plurality of second control buttons 2120, and a central portion of the top surface portion is formed in a dome-like shape that bulges upward gently. With such a size and a shape of the first control button 2110, it is easier for a user to place her/his hand on the first control button 2110. The first control button 2110 can contribute as a button for placing a hand of a user.

As depicted in FIG. 15, in a plan view, the plurality of second control buttons 2120 are arranged along the outer circumferential edge C2 of the first control button 2110. In a plan view, the plurality of second control buttons 2120 are arrayed in an arc-like shape along the outer circumferential edge C2 of the first control button 2110 in state where the plurality of second control buttons 2120 are attached to the body 2100. Each second control button 2120 has an arc-like outer circumferential edge 2121 and inner circumferential edge 2122. The outer circumferential edges 2121 of the second control buttons 2120 are arranged outside the body 2100 beyond an outer circumferential edge C1 of the body 2100 in a state where the second control buttons 2120 are attached to the body 2100. The inner circumferential edges 2122 of the second control buttons 2120 are arranged on the inner side of the outer circumferential edge C1 of the body 2100 in a state where the second control buttons 2120 are attached to the body 2100. The plurality of second control buttons 2120 are formed in such tapered shapes that the lengths of the outer circumferential edges 2121 of the plurality of second control buttons 2120 are greater than the lengths of the inner circumferential edges 2122, and the widths of the plurality of second control buttons 2120 in the circumferential direction of the body 2100 gradually decrease from the outer circumferential edges 2121 toward the inner circumferential edges 2122. The side edges of the second control buttons 2120 (the side edges continuous with the end portions of the outer circumferential edges 2121 and the end portions of the inner circumferential edges 2122) extend toward the middle of the body 2100 along the radial direction of the body 2100. With such shapes of the plurality of second control buttons 2120, clearances between pairs of adjacent second control buttons 2120 can be made uniform in a state where the plurality of second control buttons 2120 are attached to the body 2100.

As depicted in FIG. 15, each outer circumferential edge 2121 of the plurality of second control buttons 2120 is arranged outside the outer circumferential edge C1 of the body 2100, and forms an arc-like outer edge along the outer circumferential edge C1. Top surface portions of the plurality of second control buttons 2120 have openings H1 that are formed therethrough, and mark members 2400 (see FIG. 26A and FIG. 26B) mentioned later are attached to the openings H1. At each second control button 2120, the opening H1 is formed at a position closer to the outer circumferential edge 2121 of the second control button 2120 than to a central portion of the second control button 2120. The openings H1 are formed at the central positions of the second control buttons in the widthwise direction (the circumferential direction of the body 2100). Portions of the openings H1 are formed through outer circumferential portions 2131 of the second control buttons 2120.

As depicted in FIG. 15, the inner circumferential edges 2122 of the type-A to type-D second control buttons 2120A to 2120D in the plurality of second control buttons 2120 are recess in arc-like shapes along the outer circumferential edge C2 of the first control button 2110. The inner circumferential edges 2122 of the type-A to type-D second control buttons 2120A to 2120D are arranged outside the outer circumferential edge C2 of the first control button 2110, and form an arc-like inner edge along the outer circumferential edge C2.

As depicted in FIG. 15, the plurality of second control buttons 2120A have the outer circumferential portions 2131 including the outer circumferential edges 2121. The outer circumferential portions 2131 extend outward beyond the outer circumferential edge C1 of the body 2100 in a state where the second control buttons 2120 are attached to the body 2100. With such shapes of the second control buttons 2120, the top surface portion which is a control surface of the second control button 2120A can be formed large. For example, in a case where control buttons are small and their surfaces are small as on existing input devices, it is difficult for users to control the control buttons, in some cases. In this regard, by forming the top surface portion of the second control button 2120A large, it becomes easier to press-control the button, and control of the controller 2000 including the second control button 2120A can be made comfortable for users who have difficulty in feeling comfortable controlling existing input devices. In addition, since bottom surface portions (e.g. a bottom surface portion 2124A in FIG. 17A mentioned later) of the outer circumferential portions 2131 of the second control buttons 2120 are exposed, a user can hook the bottom-surface-portion sides of the outer circumferential portions 2131 of the second control buttons 2120 with a hand, part of her/his body, a tool or the like, and move up the second control buttons 2120 from the body 2100. The plurality of second control buttons 2120 can be removed from the body 2100 by moving up the plurality of second control buttons 2120 as mentioned later.

As depicted in FIG. 15, an inner circumferential edge 2122E of the type-E second control button 2120E extends toward the inside of the body 2100 beyond the outer circumferential edge C2 of the first control button 2110. As depicted in FIG. 25, the type-E second control button 2120E has, at a top surface portion 2123E (second top-surface portion) of the type-E second control button 2120E, an overhanging portion 2132E that covers a portion of the top surface portion (first top surface portion) of the first control button 2110. In a plan view, the type-A to type-D second control buttons 2120A to 2120D do not overlap the first control button 2110, and, at the overhanging portion 2132E, the type-E second control button 2120E overlaps the first control button 2110. With this configuration, the top surface portion 2123E of the type-E second control button 2120E has a large size extending in a direction toward the central portion of the body 2100. Thereby, the distance from the type-E second control button 2120E to a second control button 2120 arranged on the opposite side with the first control button 2110 interposed therebetween decreases, and it becomes easier for a user to control the second control button 2120E, and control the second control button 2120 positioned on the opposite side, in a state where she/he is placing a hand on the first control button 2110. The arrangement position of the top surface portion 2123E of the type-E second control button 2120 (e.g. the size of the overhanging portion 2132E) relative to the top surface portion of the first control button 2110 can be set as appropriate according to the ease of use for a user.

In the example depicted in FIG. 15, some buttons of the plurality of second control buttons 2120 attached to the body 2100 are type-E second control buttons 2120E. Overhanging portions 2132E overlapping the first control button 2110 in a plan view are not drawn for the type-A to type-D second control buttons 2120A to 2120D. Because of this, it is possible to ensure that there is an exposed region of the top surface portion of the first control button 2110 inside the plurality of second control buttons 2120.

FIG. 16 is an exploded perspective view depicting a state where the plurality of second control buttons 2120 and the control stick 2200 are disassembled from the controller 2000. As depicted in FIG. 16, any of the plurality of second control buttons 2120 can be removed from the body 2100. In addition, the control stick 2220 also can be removed from the stick unit 2200. For example, a control stick having a hole provided at an end portion thereof can be attached to the stick unit 2200. By inserting a strap through the hole of the control stick, and allowing a user to wear the strap or a wearable accessary (e.g. a band) to which the strap is attached, control of the control stick may become easy and comfortable for a user who feel difficulty in controlling existing control sticks.

As depicted in FIG. 16, the body 2100 has a plurality of button receiving portions 2301 (pads) outside the first control button 2110. All the plurality of button receiving portions 2301 have identical shapes, and the plurality of second control buttons 2120 can be attached to the plurality of button receiving portions 2301, respectively. The plurality of button receiving portions 2301 surround the first control button 2110 in a plan view. All the plurality of button receiving portions 2301 are arranged between the outer circumferential edge C1 of the body 2100 and the outer circumferential edge C2 of the first control button 2110. The top surface portion of the body 2100 and the plurality of button receiving portions 2301 are inclined outward from the central portion of the body 2100 along the top surface portion (see FIG. 23) of the dome-like first control button 2110. The plurality of button receiving portions 2301 may be arranged evenly in the circumferential direction along the outer circumferential edge C1 of the first control button 2110 in a plan view.

As mentioned later, each of the type-A to type-E second control buttons 2120A to 2120E has a shape corresponding to a button receiving portion 2301 at its bottom portion. A user of the controller 2000 can select and attach a desired second control button 2120 from the multiple types of the type-A to type-E second control buttons 2120A to 2120E to a portion of the body 2100 where a button receiving portion 2301 is provided. For example, as depicted in FIG. 14 and FIG. 15, the user can change the arrangement of the second control buttons 2120A to 2120E on the body 2100. Note that whereas there are eight button receiving portions 2301 in the example depicted in FIG. 16, the number of button receiving portions 2301 provided to the body 2100 is not limited to this. The maximum number of second control buttons 2120 that a user of the controller 2000 can attach to the body 2100 is the number of the button receiving portions 2301 provided to the body 2100.

As depicted in FIG. 16, at the first control button 2110, a plurality of identification information display portions 2111 expressing identification information such as numerals are formed on an outer circumferential portion including the outer circumferential edge C2 of the first control button 2110. The identification information display portions 2111 are formed at positions corresponding to the button receiving portions 2301. The identification information display portions 2111 are formed at positions corresponding to the button receiving portion 2301 in the circumferential direction of the body 2100. Because of this, a user can grasp identification information assigned to the button receiving portions 2301 by checking the identification information of the identification information display portions 2111. Whereas mutually different numerals "1" to "8" are depicted as the identification information in the example depicted in FIG. 16, the identification information is not limited to Arabic numerals, but may be Roman numerals, or may be another type of character or symbol. In addition, the identification information may be formed as braille patterns or by embossing so as to allow a user to identify the identification information by touching it.

The button receiving portions 2301 are provided with switches as mentioned later. In an application (e.g. a game application) executed by an information processing apparatus such as a console or a server that the controller 2000 communicates with, the switches of button receiving portions 2301 corresponding to functions of the application can be set, and assignment of switches corresponding to the functions can be changed. For example, a user can change assignment of a predetermined function of the application assigned to the switch of a button receiving portion 2301 arranged at a position corresponding to the identification information "1" in FIG. 16 (the same in the circumferential direction of the body 2100), and assign the predetermined function to the switch of a button receiving portion 2301 arranged at a position that is adjacent to the position corresponding to the identification information "1," and corresponds to the identification information "2."

The type-A to type-E second control buttons 2120A to 2120E have mutually different shapes. For example, a user can identify which of the type A to the type E a second control button 2120 that she/he touched is, visually and from the feel of a hand on the basis of the differences among the shapes of the type-A to type-E second control buttons 2120A to 2120E. Hereinbelow, each of the type-A to type-E second control buttons 2120A to 2120E and the structure of a button receiving portion 2301 to receive each of the second control buttons 2120A to 2120E are explained on the basis of the figures.

FIG. 17A is a side view of the type-A second control button 2120A, and FIG. 17B is a perspective view depicting the lower side of the type-A second control button 2120A. FIG. 18A is a side view of the type-B second control button 2120B, and FIG. 18B is a perspective view depicting the lower side of the type-B second control button 2120B. FIG. 19A is a side view of the type-C second control button 2120C, and FIG. 19B is a perspective view depicting the lower side of the type-C second control button 2120C. FIG. 20 is a perspective view depicting the lower side of the type-D second control button 2120D. FIG. 21A is a side view of the type-E second control button 2120E, and FIG. 21B is a perspective view depicting the lower side of the type-E second control button 2120E. FIG. 21C is an exploded perspective view of the type-E second control button 2120E, and depicts the lower side of the type-E second control button 2120E.

In addition, FIG. 22A is a perspective view of a switch unit 2300 that is arranged around the first control button 2110 on the body 2100, and is provided with a button receiving portion 2301. FIG. 22B is an exploded perspective view depicting constituent elements of the switch unit 2300. FIG. 23 is a cross-sectional view taken along a line A-A in FIG. 15, and FIG. 24 is a cross-sectional view taken along a line B-B in FIG. 15. FIG. 23 and FIG. 24 depict states where the type-A second control button 2120A is attached to the button receiving portion 2301. FIG. 25 is a cross-sectional view taken along a line C-C in FIG. 15, and depicts a state where the type-E second control button 2120E is attached to the button receiving portion 2301.

First, the type-A second control button 2120A is explained. As depicted in FIG. 17A, a top surface portion 2123A of the type-A second control button 2120A includes an outer circumferential edge 2121A and an inner circumferential edge 2122A of the second control button 2120A, and faces upward and a diagonal direction relative to the radial direction of the body 2100 (a direction from the inner circumferential edge 2122A toward the outer circumferential edge 2121A). The top surface portion 2123A of the type-A second control button 2120A is slightly curved in the upward/downward direction. In addition, the bottom surface portion 2124A of the type-A second control button 2120A includes the outer circumferential edge 2121A and the inner circumferential edge 2122A similarly to the top surface portion 2023A. The bottom surface portion 2124A of the type-A second control button 2120A faces downward and a diagonal direction relative to the radial direction of the body 2100 (a direction from the outer circumferential edge 2121A toward the inner circumferential edge 2122A). At the type-A second control button 2120A, the thickness of the outer circumferential edge 2121A is greater than the thickness of the inner circumferential edge 2122A. In addition, the type-A second control button 2120A has an inclined surface 2127A on the outer circumferential edge 2121A. The inclined surface 2127A is the bottom surface of the outer circumferential portion 2131 of the second control button 2120A, and is inclined downward and inward.

As depicted in FIG. 17B, the type-A second control button 2120A has a fitting projection portion 2125A at the bottom surface portion 2124A. The fitting projection portion 2125A has a shape corresponding to the plurality of button receiving portions 2301 (see FIG. 16) provided at the top surface portion 2101 of the body 2100. The fitting projection portion 2125A can be attached to any of the plurality of button receiving portions 2301. At the second control button 2120A, the fitting projection portion 2125A protrudes downward from the bottom surface portion 2124A. The plurality of button receiving portions 2301 are recess downward from the top surface portion 2101 of the body 2100, and have fitting recess portions 2302 (see FIG. 22A) that receive the fitting projection portion 2125A of the second control button 2120A. A relation between the recess and projection of the fitting projection portion 2125A and the button receiving portions 2301 may be opposite.

In the present embodiment, the fitting projection portion 2125A of the second control button 2120A has, at its central portion, a first fitting portion 2126A (see FIG. 17B), and a button receiving portion 2301 has, at its central portion (a central portion of the fitting recess portion 2302), a second fitting portion 2303 (see FIG. 22A). In a state where the second control button 2125A is attached to a button receiving portion 2301, the second fitting portion 2303 of the button receiving portion 2301 fits inside the first fitting portion 2126A of the second control button 2125A. In addition, first fitting portions 2126B to 2126E to which the second fitting portions 2303 of the button receiving portions 2301 fit are formed also at central portions of fitting projection portions 2125B to 2125E of the type-B to type-E second control buttons 2120B to 2120E mentioned later. Note that whereas the first fitting portion 2126A is a recess portion which is recess in a direction away from the button receiving portion 2301, and the second fitting portion 2303 is a projection portion protruding toward the second control button 2120A in FIG. 17B and FIG. 22A, the relation between the recess and projection of the first fitting portion 2126A and the second fitting portion 2303 may be opposite. For example, the first fitting portion 2126A may be a projection portion protruding toward the button receiving portion 2301, and the second fitting portion 2303 may be a recess portion which is recess in a direction away from the second control button 2120A. In addition, whereas the first fitting portion 2126A and the second fitting portion 2303 have oblong shapes having corner portions that are rounded in a plan view, the shapes of the first fitting portion 2126A and the second fitting portion 2303 are not limited to these.

Next, the type-B second control button 2120B is explained. As depicted in FIG. 18A and FIG. 18B, a top surface portion 2123B and a bottom surface portion 2124B of the type-B second control button 2120B include an outer circumferential edge 2121B and an inner circumferential edge 2122B. The type-B second control button 2120B has an inclined surface 2127B on the outer circumferential edge 2121B. The inclined surface 2127B is the bottom surface of the outer circumferential portion 2131 of the second control button 2120B, and is inclined downward and inward. The top surface portion 2123B of the type-B second control button 2120B bulges upward at its central portion unlike the top surface portion 2123A of the type-A second control button 2120A. Since the top surface portion 2123B of the type-B second control button 2120B has a bulging shape, it is easier for some users to control the type-B second control button 2120B as compared with the type-A second control button 2120A, in some cases. For example, in a state where a user places her/his hand on the top surface portion of the first control button 2110, the user controls the second control button 2120B by sliding the hand along the top surface portion of the dome-like first control button 2110, in some cases. Since the hand of the user interferes with the top surface portion 2123B of the second control button 2120B in that process, press-control of the type-B second control button 2120B becomes easier as compared to control of the type-A second control button 2120A in some cases.

As depicted in FIG. 18B, the fitting projection portion 2125B similar to the fitting projection portion 2125A of the type-A second control button 2120A is formed also at the bottom surface portion 2124B of the type-B second control button 2120B. Thereby, the type-B second control button 2120B also can be attached, at the fitting projection portion 2125B, to any of the plurality of button receiving portions 2301. In addition, a plurality of holes H2 are formed through the bottom surface portion 2124B of the type-B second control button 2120B, and it is attempted thereby to reduce the weight of the type-B second control button 2120B.

Next, the type-C second control button 2120C is explained. As depicted in FIG. 19A and FIG. 19B, a top surface portion 2123C and a bottom surface portion 2124C of the type-C second control button 2120C include an outer circumferential edge 2121C and an inner circumferential edge 2122C. The type-C second control button 2120C has an inclined surface 2127C on the outer circumferential edge 2121C. The inclined surface 2127C is the bottom surface of the outer circumferential portion 2131 of the second control button 2120C, and is inclined downward and inward. The top surface portion 2123C of the type-C second control button 2120C faces upward and a diagonal direction relative to the radial direction of the body 2100 (a direction from the outer circumferential edge 2121C toward the inner circumferential edge 2122C), unlike the top surface portion 2123A of the type-A second control button 2120A. The top surface portion 2123C of the type-C second control button 2120C is slightly curved in the upward/downward direction. In addition, the bottom surface portion 2124C of the type-C second control button 2120A faces downward and a diagonal direction relative to a direction from the outer circumferential edge 2121C toward the inner circumferential edge 2122C, similarly to the bottom surface portion 2124A of the type-A second control button 2120A. As depicted in FIG. 19C, the thickness of the type-C second control button 2120A in the upward/downward direction increases gradually from the inner circumferential edge 2122 toward the outer circumferential edge 2121.

As depicted in FIG. 14 and FIG. 19A, in a state where a plurality of the type-A to type-E second control buttons 2120A to 2120E are attached to the body 2100, the position of the outer circumferential edge 2121C of the type-C second control button is the highest. With this configuration, it is easier for some users to control the type-C second control button 2120B compared with other second control buttons 2120, in some cases. For example, in a process in which a user slides her/his hand along the top surface portion of the dome-like first control button 2110 to control the second control button 2120C, the hand of the user interferes with the outer circumferential portion 2121C of the second control button 2120C. Thereby, press-control of the type-C second control button 2120C is easier as compared to control of other second control buttons 2120 (e.g. the type-A second control button 2120A), in some cases.

As depicted in FIG. 19B, a fitting projection portion 2125C similar to the fitting projection portion 2125A of the type-A second control button 2120A is formed also at the bottom surface portion 2124C of the type-C second control button 2120C. Thereby, the type-C second control button 2120C also can be attached, at the fitting projection portion 2125B, to any of the plurality of button receiving portions 2301. In addition, a plurality of holes H3 are formed through the bottom surface portion 2124C of the type-C second control button 2120C. Thereby, it is attempted to reduce the weight of the type-C second control button 2120C similarly to the type-B second control button 2120B.

Next, the type-D second control button 2120D is explained. As depicted in FIG. 14 and FIG. 20, similarly to the type-A second control button 2120A, the type-D second control button 2120D has a top surface portion that faces upward and a diagonal direction relative to the radial direction of the body 2100 (a direction from an inner circumferential edge 2122D toward an outer circumferential edge 2121D), and is slightly curved in the upward/downward direction. The type-D second control button 2120D has an inclined surface 2127D on the outer circumferential edge 2121D. The inclined surface 2127D is the bottom surface of the outer circumferential portion 2131 of the second control button 2120D, and is inclined downward and inward. The type-D second control button 2120D is different from the type-A second control button 2120A in that the type-D second control button 2120D is wider than the type-A second control button 2120A in the circumferential direction of the body 2100 to which the plurality of second control buttons 2120 are attached. By making the type-D second control button 2120D wide, the type-D second control button 2120D becomes easier to press than the type-A second control button 2120A is, in some cases. In addition, it becomes easier to perform control of pressing adjacent buttons simultaneously, in some cases. At the type-A to type-D second control buttons 2120, the widths of the outer circumferential edges 2121A to 2121C in the circumferential direction are the same or approximately the same, and the width of the outer circumferential edge 2121D is or approximately is twice as large as the width of the outer circumferential edge 2121A. Similarly to this, at the type-A to type-D second control buttons 2120, the widths of the inner circumferential edges 2122A to 2122C in the circumferential direction are the same or approximately the same, and the width of the inner circumferential edge 2122D is or approximately is twice as large as the width of the inner circumferential edge 2122A.

As depicted in FIG. 20, two fitting projection portions 2125D similar to the fitting projection portion 2125A of the type-A second control button 2120A are formed also at the bottom surface portion 2124D of the type-D second control button 2120D. The type-D second control button 2120D is different from the type-A second control button 2120A also in that the number of the fitting projection portions 2125D is two. The two fitting projection portions 2125D are separate from each other in the circumferential direction of the body 2100 at the bottom surface portion 2124D of the type-D second control button 2120D. The type-D second control button 2120D is attached to the body 2100 by attaching the two fitting projection portions 2125D to two adjacent button receiving portions 2301 (see FIG. 16). By pressing the type-D second control button 2120D, a user can press one or both of switch elements 2381 (see FIG. 22B) provided to the two adjacent button receiving portions 2301.

Last, the type-E second control button 2120E is explained. As depicted in FIG. 21A, similarly to the type-A second control button 2120A, the type-E second control button 2120E has the top surface portion 2123E that faces upward and a diagonal direction relative to the radial direction of the body 2100 (a direction from the inner circumferential edge 2122E toward an outer circumferential edge 2121E), and is slightly curved in the upward/downward direction. As depicted in FIG. 15, the inner circumferential edge 2122E included in the top surface portion 2123E of the type-E second control button 2120E protrudes toward the central portion of the body 2100 more significantly than the inner circumferential edges 2122 of the other second control buttons 2120 do.

As depicted in FIG. 21A and FIG. 21B, the overhanging portion 2132E including the inner circumferential edge 2122E is formed at the top surface portion 2123E of the type-E second control button 2120E. As depicted in FIG. 25, in a state where the second control button 2120E is attached to the body 2100, the overhanging portion 2132E of the second control button 2120E covers a portion of the top surface portion of the first control button 2110.

As depicted in FIG. 21B, a fitting projection portion 2125E is formed also at a bottom surface portion 2124E of the type-E second control button 2120E. As depicted in FIG. 23 and FIG. 25, the fitting projection portions 2125A and 2125E of the second control buttons 2120A and 2120E have, on the sides of the inner circumferential edges 2122A and 2122E, engagement portions 2151 (second engagement portions) that engage with button receiving portions 2301. Similarly to this, engagement portions 2151 that engage with button receiving portions 2301 are formed also at the fitting projection portions 2125B to 2125C of the type-B to type-D second control buttons 2120B to 2120C.

As depicted in FIG. 25, the fitting projection portion 2125E of the type-E second control button 2120E has, also on the side of the outer circumferential edge 2121E, an engagement portion 2128E (first engagement portion) that engages with the button receiving portion 2301. In addition, the outer circumferential edge 2121E of the type-E second control button 2120E is provided with a movable portion 2129E that protrudes outward from the second control button 2120E, and can be pressed in the direction toward the inner circumferential edge 2122E. The engagement portion 2128E moves in the direction toward the inner circumferential edge 2122E according to press-control of the movable portion 2129E. The engagement portion 2128E and the movable portion 2129E are provided only to the type-E second control button 2120E. At the type-A to type-D second control buttons 2120A to 2120D, engagement portions to be caught by button receiving portions 2301 are not formed on the outer-circumferential-edge-2121 sides of the fitting projection portions 2125A to 2125D. In addition, the type-A to type-D second control buttons 2120A to 2120D are not provided with movable portions that can be pressed in the directions toward the inner circumferential edges 2122.

As depicted in FIG. 21C, the type-E second control button 2120E has an upper member 2140E on which the outer circumferential edge 2121E, the inner circumferential edge 2122E, the top surface portion 2123E (see FIG. 21A), and the bottom surface portion 2124E of the type-E second control button 2120E are formed, and a lower member 2150E on which the fitting projection portion 2125E is formed. The type-E second control button 2120E is formed by combining the upper member 2140E and the lower member 2150E in the upward/downward direction. Similarly to this, each of the type-A to type-D second control buttons 2120A to 2120D also may be formed by combining an upper member (e.g. an upper member 2140A depicted in FIG. 23), and a lower member (e.g. a lower member 2150A depicted in FIG. 23).

As depicted in FIG. 21C, similarly to the inner circumferential edges 2122 of the type-A to type-D second control buttons 2120A to 2120D, a side surface 2141E closer to the inner circumferential edge 2122E of the upper member 2140E of the type-E second control button 2120E is recess in an arc-like shape along the outer circumferential edge C2 of the first control button 2110. With this configuration, it is possible to prevent the bottom surface portion 2124E of the type-E second control button 2120E from interfering with the first control button 2110 when the type-E second control button 2120E is attached to a button receiving portion 2301 of the body 2100 or is pressed down toward the body 2100.

As depicted in FIG. 21C, the type-E second control button 2120E has an engagement member 2160E on which the engagement portion 2128E and the movable portion 2129E are formed. The engagement member 2160E is arranged between the upper member 2140E and the lower member 2150E. A housing recess portion 2142E which is recess upward relative to the bottom surface portion 2124E is formed on the upper member 2140E, and the engagement member 2160E is housed inside the housing recess portion 2142E. In the present embodiment, the type-A to type-D second control buttons 2120A to 2120D do not have members equivalent to the engagement member 2160E.

As depicted in FIG. 21C, the engagement member 2160E has a base portion 2161E on which the engagement portion 2128E and the movable portion 2129E are formed, a fixation portion 2162E that is separate from the base portion 2161E in the direction toward the inner circumferential edge 2122E, a spring portion 2163E that extends curvedly from the base portion 2161E, and is continuous to the fixation portion 2162E, and a stopper portion 2164E extending from the base portion 2161E in the direction toward the inner circumferential edge 2122E. The engagement portion 2128E is a claw portion extending downward from the base portion 2161E, and having a lower end protruding in the direction toward the movable portion 2129E.

The fixation portion 2162E of the engagement member 2160E is fixed to the housing recess portion 2142E of the upper member 2140E. Thereby, the fixation portion 2162E is fixed at a position relative to the upper member 2140E and the lower member 2150E. When a user presses the movable portion 2129E in the direction toward the inner circumferential edge 2122E, the base portion 2161E and the engagement portion 2128E formed on the base portion 2161E move in a direction to approach the fixation portion 2162E due to elastic warping of the spring portion 2163E. Here, by abutting on the fixation portion 2162E, the stopper portion 2164E restricts excessive pressing of the movable portion 2129E. When the user releases the movable portion 2129E in this state, the base portion 2161E and the engagement portion 2128E move in a direction away from the fixation portion 2162E, and returns to the initial position since the shape of the spring portion 2163E returns to the initial state. By allowing the movable portion 2129E and the engagement portion 2128E to move relative to the fixation portion 2162E in this manner, the movable portion 2129E and the engagement portion 2128E can move relative to a member 2131E and the lower member 2150E.

The structure of the button receiving portions 2301 to which the type-A to type-E second control buttons 2120A to 2120E can be attached on the body 2100 is explained. As depicted in FIG. 16, the body 2100 is provided with the plurality of button receiving portions 2301. Each button receiving portion 2301 is provided to a switch unit 2300 depicted in FIG. 22A and FIG. 22B. On the body 2100, the plurality of button receiving portions 2301 and the plurality of switch units 2300 surround the first control button 2110.

As depicted in FIG. 22A and FIG. 22B, each switch unit 2300 has a base member 2310, a cover member 2320 that covers a portion of the base member 2310, a first support member 2330 that supports the base member 2310 from below, a shaft member 2340, a flat-plate-like magnet 2350, a magnetic material 2360 that covers the lower side of the magnet 2350, a second support member 2370 that supports the magnet 2350 and the magnetic material 2360 from below, and a second circuit board 2380 having a top surface portion on which a switch element 2381 is implemented. The cover member 2320 is formed in a frame-like shape and has an opening H4 at its central portion. A button receiving portion 2301 is exposed through the opening H4 of the cover member 2320. An engagement portion 2321 to be caught by the first support member 2330 is formed at the lower end of the cover member 2320. By fixing the cover member 2320 to the first support member 2330, detachment of the shaft member 2340, the magnet 2350, the magnetic material 2360, and the second support member 2370 that are arranged between the cover member 2320 and the first support member 2330 from the first support member 2330 is prevented.

As depicted in FIG. 22B and FIG. 23, in the switch unit 2300, the base member 2310 and the shaft member 2340 are arranged between the cover member 2320 and the first support member 2330. In the base member 2310, there is a recess portion on a side (lower side) opposite to the second fitting portion 2303 which is a projection top surface portion, and the magnet 2350 and the magnetic material 2360 are housed inside the recess portion. In addition, a wall portion 2313 surrounding the second fitting portion 2303 is formed at the top surface portion of the base member 2310. In the base member 2310, a projection portion 2316 protruding to the outer-circumferential-edge-C1 side of the body 2100 is formed outside the wall portion 2313. The projection portion 2316 of the base member 2310 is sandwiched between the cover member 2320 and the first support member 2330 in the upward/downward direction. Thereby, it is possible to prevent the base member 2310 from being detached on the outer-circumferential-edge-C1 side of the body 2100.

As depicted in FIG. 22B and FIG. 23, in the switch unit 2300, the shaft member 2340 is provided to the base member 2310. The shaft member 2340 is attached to the base member 2310 and can rotate about an axis Ax1 relative to the base member 2310. The shaft member 2340 has a shaft portion 2341 extending along the axis Ax1, and an engagement portion 2342 positioned above the axis Ax1. The engagement portion 2342 is a claw portion extending upward from the shaft portion 2341, and having an upper end portion protruding in the direction toward the outer circumferential edge C1 of the body 2100. The engagement portion 2342 extends along the axis Ax1. As depicted in FIG. 22A, together with the wall portion 2313 of the base member 2310, the engagement portion 2342 surrounds the fitting recess portion 2302, and the second fitting portion 2303 provided to the fitting recess portion 2302. The engagement portion 2342 may be a recess portion to be caught by the engagement portion 2151 of the second control button 2120.

The second circuit board 2380 of the switch unit 2300 depicted in FIG. 22B is fixed to the first support member 2330 by a fixing member 2390 such as a screw. An opening H5 is formed through a central portion of the first support member 2330, and the switch element 2381 is exposed through the opening H5. In addition, the second support member 2370, the magnetic material 2360, the magnet 2350, the base member 2310, and the cover member 2320 are arranged above the switch element 2381 in this order from below. When the second control button 2120 is pressed downward by a user, the second support member 2370 moves downward via the base member 2310 and the magnet 2350. By sensing approach of the second support member 2370 or pressing of the switch by the second support member 2370, the switch element 2381 senses that the second control button 2120 is pressed by the user.

As depicted in FIG. 23, the type-A second control button 2120A is formed by combining, in the upward/downward direction, the upper member 2140A on which the outer circumferential edge 2121A, the top surface portion 2123A, and the like are formed, and the lower member 2150A on which the fitting projection portion 2125A is formed.

As depicted in FIG. 23, the top surface portion 2123A of the type-A second control button 2120A is arranged above an extended line L1 along the top surface portion of the first control button 2110. Similarly to this, the top surface portions 2123B to 2123E of the type-B to type-E second control buttons 2120B to 2120E also are arranged above the extended line along the top surface portion of the first control button 2110. Thereby, a gap is created between the top surface portion of the first control button 2110 and the top surface portions 2123A to 2123E of the second control buttons 2120A to 2120E. For example, when a user slides her/his hand from the top surface portion of the first control button 2110 to move the hand to any of the plurality of second control buttons 2120, she/he can easily check the boundary between the first control button 2110 and the second control button 2120 when her/his hand hits the gap, and also can perceive that her/his hand is touching the second control button 2120 by perceiving that the hand went over the gap by the feel of her/his hand. That is, it becomes easier to recognize switching of control-target buttons in button control at portions larger than fingertips, and thereby control of the controller 2000 including the second control buttons 2120 can be made comfortable for users who have difficulty in feeling comfortable controlling existing input devices.

The controller 2000 has a first magnetic structure and a second magnetic structure. The first magnetic structure includes at least two magnetic poles that are separated in the circumferential direction of the body 2100 (first direction). The second magnetic structure includes a magnetic material or a magnet facing the at least two magnetic poles of the first magnetic structure. In the present embodiment, "magnetic poles" mean end surfaces such as end portions of a magnet or end portions of a magnetic material where magnetic fluxes exit and enter. The first magnetic structure is provided to one of the base member 2310 included in a button receiving portion 2301 and a second control button 2120, and the second magnetic structure is provided to the other one of the base member 2310 and the second control button 2120.

By providing the first and second magnetic structures to the base member 2310 and the second control button 2120, the second control button 2120 is attracted to the button receiving portion 2301 by magnetic force. Here, since the at least two magnetic poles are separated in the circumferential direction of the body 2100 in the first magnetic structure, the posture of the second control button 2120 can be corrected by the magnetic force. A user only has to arrange the second control button 2120 at an approximate position when attaching the second control button 2120 to the button receiving portion 2301, and attachment work of the second control button 2120 can be performed easily. For example, it becomes possible for a user to attach the second control button 2120 to the button receiving portion 2301 by causing the second control button 2120 to slide along the top surface portion of the dome-like first control button 2110, and moving the second control button 2120.

In the present embodiment, as depicted in FIG. 23, the base member 2310 has the one magnet 2350, and the second control button 2120 has one magnetic material 2152. As depicted in FIG. 24, the magnet 2350 has a magnetic pole (e.g. N pole) N1 on the upper side, and has a magnetic pole (a magnetic pole opposite to the magnetic pole N1, for example S pole) S1 on the lower side. The magnetic pole N1 and the magnetic pole S1 of the magnet 2350 are separated in the upward/downward direction (the press-down direction of the second control button 2120, and a third direction crossing the first direction and a second direction mentioned later).

For example, the magnetic material 2152 is a sheet metal, is fixed to the lower member 2150A, and is exposed downward through the first fitting portion 2126A (FIG. 17B) which is a recess portion or the like. The type-B to type-E second control buttons 2120B to 2120E also have magnetic materials 2152 fixed to the lower members. In a state where the second control button 2120A is attached to the button receiving portion 2301, the magnetic material 2152 faces the magnet 2350 provided on the lower side of the button receiving portion 2301, and is attracted to the button receiving portion 2301 by magnetic force of the magnet 2350. This is not the sole example. The base member 2310 may have a magnetic material, and the second control button 2120 may have a magnet. In addition, the second control button 2120 may have a magnet instead of having the magnetic material 2152.

The first magnetic structure includes the U-shaped magnetic material 2360. As depicted in FIG. 22B and FIG. 24, the magnet 2350 is arranged in a recess portion of the U-shaped magnetic material 2360. The magnetic material 2360 functions as a generally-called magnetization yoke that enhances the force of the magnet 2350 to the attract magnetic material 2152. As depicted in FIG. 24, at an upper end portion of the magnetic material 2360, magnetic force of magnetic poles (e.g. S poles) S2 and S3 opposite to a magnetic pole (e.g. N pole) N1 on the upper side of the magnet 2350 is generated by the magnet 2350. Note that a relation between the N pole and the S pole of the magnet 2350 and the magnetic material 2360 may be opposite.

As depicted in FIG. 24, the three magnetic poles S2, N1, and S3 including the magnetic pole N1 of the magnet 2350 are arrayed in the button receiving portion 2301 in this order along the circumferential direction of the body 2100 (a direction represented by an arrow D3 in FIG. 22A and FIG. 24). As depicted in FIG. 16 and FIG. 22A, the length of the button receiving portion 2301 in the circumferential direction of the body 2100 is greater than the length of the button receiving portion 2301 in the radial direction of the body 2100. The magnetic poles S2, N1, and S3 included in the first magnetic structure are arrayed along the longitudinal direction of the button receiving portion 2301.

With this arrangement of the magnetic pole S2, N1, and S3 included in the first magnetic structure in the button receiving portion 2301, the posture of the second control button 2120 relative to the button receiving portion 2301 can be corrected by magnetic force. Thereby, the work to attach the second control button 2120 to the button receiving portion 2301 becomes easier. In addition, as compared to a case where a plurality of magnets are arrayed next to each other in the circumferential direction of the button receiving portion 2301, the number of magnets 2350 arranged in the button receiving portion 2301 can be reduced.

The first magnetic structure may have a plurality of magnets. In this case, preferably, at the button receiving portion 2301, the plurality of magnets are separated in the circumferential direction of the body 2100 (first direction). In addition, magnetic poles of two adjacent magnets in the plurality of magnets are preferably opposite magnetic poles. For example, in a case where the magnetic pole on the upper side of one magnet is the N pole, the magnetic pole on the upper side of a magnet adjacent thereto is preferably the S pole. In a case where the first magnetic structure has a plurality of magnets, the first magnetic structure may have a plurality of U-shaped magnetic materials. In this case, magnets in the plurality of magnets may be arranged respective recess portions of the plurality of U-shaped magnetic materials.

As depicted in FIG. 23, the button receiving portion 2301 of the body 2100 includes the base member 2310, and the shaft member 2340 attached to the base member 2310, and the shaft member 2340 extends along the axis Ax1, and has the shaft portion 2341 including the axis Ax1, and the engagement portion 2342 extending upward from the shaft portion 2341. In a state where the second control button 2120A is attached to the button receiving portion 2301, the engagement portion 2342 of the shaft member 2340 is arranged between the first control button 2110 and the second control button 2120A, and is in contact with the second control button 2120A.

The fitting projection portion 2125A of the second control button 2120A has the engagement portion 2151 at a position on the inner-circumferential-edge-2122 side. In a state where the second control button 2120A is attached to the button receiving portion 2301, the engagement portion 2151 of the second control button 2120A is in contact with the engagement portion 2342 of the shaft member 2340, and is engaged with the engagement portion 2342. The engagement portion 2151, which is a claw portion, is caught by the engagement portion 2342, which is a claw portion as well. One of the engagement portion 2151 and the engagement portion 2342 may be a claw portion, and the other may be a recess portion to be caught by the claw. Due to the mutual engagement between the engagement portion 2151 and the engagement portion 2342, displacement of the second control button 2120A in a direction away from the button receiving portion 2301 is hindered. In addition, engagement portions to engage with engagement portions 2342 of shaft members 2340 are formed also at the fitting projection portions 2125B to 2125D of the type-B to type-D second control buttons 2120B to 2120D.

As depicted in FIG. 23, the engagement portion 2151 of the second control button 2120A is positioned in a direction (the second direction, a direction crossing the first direction in which the at least two magnetic poles are separated) toward the central portion of the body 2100 relative to the at least two magnetic poles included in the first magnetic structure (e.g. the three magnetic poles formed by the magnet 2350 and the U-shaped magnetic material 2360). The second control button 2120A can be pressed down in the third direction crossing the first direction and the second direction. Since the engagement portion 2151 of the second control button 2120A is separated in the second direction (a direction crossing the first direction in which the at least two magnetic poles are separated, and the third direction which is the press-down direction of the second control button 2120A) relative to the magnetic poles of the first magnetic structure, it is possible to prevent the second control button from being detached from the body 2100 when a side opposite to the side where the engagement portion 2151 is provided to the second control button 2120A is pressed down.

The second control button 2120A extends beyond the outer circumferential edge of the button receiving portion 2301 in a direction (a direction toward the outer circumferential edge C1 of the body 2100) opposite to the direction in which the engagement portion 2151 is positioned relative to the at least two magnetic poles included in the first magnetic structure. In a plan view depicted in FIG. 16, the second control button 2120A covers the entire button receiving portion 2301. As depicted in FIG. 23, the second control button 2120A has a first portion A1 and a second portion A2. The first portion A1 is positioned on a side where the engagement portion 2151 is provided, relative to the at least two magnetic poles of the first magnetic mechanism. The second portion A2 is a portion on a side opposite to the first portion A1, relative to the at least two magnetic poles of the first magnetic mechanism. The width of the second portion A2 in the radial direction of the body 2100 (second direction) is greater than the width of the first portion A1. In a plan view, the second portion A2 is larger than the first portion A1. Because of this, it is easier for a user to press the second portion A2 than the first portion A1.

As depicted in FIG. 23, a clearance D1 is formed between the outer circumferential portion C1 of the body 2100 and the second control button 2120A. Because of this, in a case where a user presses down a position (e.g. the second portion A2) closer to the outer circumferential edge 2121A of the second control button 2120A, a portion (e.g. the first portion A1) closer to the inner circumferential edge 2122A of the second control button 2120A is urged upward. Here, at the portion closer to the inner circumferential edge 2122A of the second control button 2120A, the engagement portion 2151 is caught by the engagement portion 2342 of the button receiving portion 2301. Thereby, it is possible to effectively prevent the second control button 2120A from being detached from the button receiving portion 2301. In addition, as for the type-B to type-D second control buttons 2120B to 2120D also, the widths, in the radial direction of the body 2100, of second portions which are on sides opposite to first portions on the sides where the engagement portions 2151 are provided are greater than the widths of the first portions. Thereby, it is possible to effectively prevent also the type-B to type-D second control buttons 2120B to 2120D from being detached from the button receiving portions 2301.

The engagement portion 2342 of the shaft member 2340 is urged to a position depicted in FIG. 23 (hereinafter, referred to as a lock position) by an elastic member (not depicted) such as a spring. When the second control button 2120A has been attached to the button receiving portion 2301, the engagement portion 2342 is arranged at the lock position, and is engaged with the engagement portion 2151 of the second control button 2120A. When a user moves up the outer circumferential edge 2121A of the second control button 2120A upward in this state, the engagement portion 2342 of the shaft member 2340 is pressed by the second control button 2120A, and the entire shaft member 2340 rotates about the axis Ax1. As a result, the engagement portion 2342 of the shaft member 2340 moves from the lock position, which is the initial position depicted in FIG. 23, to an unlock position (a position closer to the first control button 2110 than the lock position is). Thereby, it becomes possible to remove the second control button 2120A from the button receiving portion 2301. By moving up the outer circumferential edge 2121A of the second control button 2120A upward, the user can remove the second control button 2120A from the button receiving portion 2301 easily. The type-B to type-D second control buttons 2120B to 2120D also can be removed easily from the button receiving portions 2301 by moving up their outer circumferential edges 2121.

As depicted in FIG. 23, the inclined surface 2127A extending downward and in the direction toward the central portion of the body 2100 from the outer edge of the outer circumferential edge 2121A of the type-A second control button 2120A is formed at the outer circumferential edge 2121A. By pressing the inclined surface 2127A when a user moves up the outer circumferential edge 2121A of the second control button 2120A upward, the second control button 2120A moves upward and in the direction toward the central portion of the body 2100. When the second control button 2120A moves in the direction toward the central portion of the body 2100, the engagement portion 2342 of the shaft member 2340 is pressed by the second control button 2120A, and moves to the unlock position, and it becomes possible to remove the second control button 2120A from the button receiving portion 2301. That is, by forming the inclined surface 2127A on the outer circumferential edge 2121A of the second control button 2120A, it becomes easier to remove the second control button 2120A. In addition, inclined surfaces 2127B to 2127D extending downward and in directions toward the central portion of the body 2100 are formed also on the outer circumferential edges 2121B to 2121D of the type-B to type-D second control buttons 2120B to 2120D. Thereby, it becomes easier also to remove the type-B to type-D second control buttons 2120B to 2120D.

As depicted in FIG. 23, the button receiving portion 2301 including the base member 2310 and the shaft member 2340 is urged upward by the switch of the switch element 2381. An outer edge portion of the button receiving portion 2301 abuts on the frame-like cover member 2320 where the opening H4 (see FIG. 22B) is formed. The projection portion 2316 (see FIG. 22B) of the base member 2310 is arranged on one side (an end portion closer to the edge portion C1 of the body 2100) of the outer edge portion of the button receiving portion 2301, and a projection portion 2343 protruding in a direction toward the central portion of the body 2100 (a direction crossing the upward/downward direction and the axis Ax1) from the shaft portion 2341 of the shaft member 2340 is arranged on the other side (an end portion closer to the central portion of the body 2100) of the outer edge portion. The projection portion 2316 of the base member 2310 and the projection portion 2343 of the shaft member 2340 abut on the cover member 2320 fixed to the body 2100. In a case where the one side or the other side of the outer edge portion of the button receiving portion 2301 is pressed, the button receiving portion 2301 can move downward with a side opposite to the pressed side as a fulcrum. Thereby, it becomes possible to control the switch of the switch element 2381 by pressing either of both the one side and the other side of the outer edge portion of the button receiving portion 2301.

As depicted in FIG. 25, the type-E second control button 2120E is formed by combining the upper member 2140E and the lower member 2150E in the upward/downward direction, and the engagement member 2160E is arranged between the upper member 2140E and the lower member 2150E. As depicted in FIG. 25, the type-E second control button 2120E also has the magnetic material 2152 such as a sheet metal on the lower member 2150E. Thereby, the magnetic material 2152 is attracted to the button receiving portion 2301 by magnetic force of the magnet 2350 provided to the button receiving portion 2301, and it is possible to make it easier to attach the type-E second control button 2120E to the button receiving portion 2301. In addition, since a plurality of magnetic poles are arranged at the button receiving portion 2301 along the circumferential direction of the body 2100, the posture of the type-E second control button 2120E can be corrected when the type-E second control button 2120E is attached to the button receiving portion 2301.

As depicted in FIG. 25, the overhanging portion 2132E including the inner circumferential edge 2122E of the type-E second control button 2120E covers a portion including the outer circumferential edge C2 of the top surface portion of the first control button 2110. It is ensured that a clearance D2 is formed in the upward/downward direction between the overhanging portion 2132E and the top surface portion of the first control button 2110. The clearance D2 is larger than the movable range of the second control button 2120E (i.e. the movable range of the button receiving portion 2301). Thereby, the overhanging portion 2132E is prevented from interfering with the first control button 2110 when the type-E second control button 2120E is pressed down.

As depicted in FIG. 25, the type-E second control button 2120E includes the outer circumferential portion 2131E extending outward beyond the outer circumferential edge C1 of the body 2100. As depicted in FIG. 15, the type-A to type-D second control buttons 2120A to 2120D also include the outer circumferential portions 2131 (e.g. the outer circumferential portion 2313A of the type-A second control button 2120A depicted in FIG. 23) extending outward beyond the outer circumferential edge C1.

As depicted in FIG. 15, at the type-E second control button 2120E, the width of the overhanging portion 2132E is narrower than the width of the outer circumferential portion 2131E. With this configuration, the layout of a plurality of control buttons including the type-E second control button 2120E on the body 2100 becomes easier. As depicted in FIG. 25, similarly to the type-A second control button 2120A, the fitting projection portion 2125E of the type-E second control button 2120E has the engagement portion 2151 (second engagement portion) at a position closer to the inner circumferential edge 2122E of the fitting projection portion 2125E (a position closer to the overhanging portion 2132E). In a state where the second control button 2120E is attached to the button receiving portion 2301, the engagement portion 2151 is engaged with the engagement portion 2342 of the shaft member 2340. Thereby, for example, it is possible to effectively prevent the type-E second control button 2120E from being detached from the button receiving portion 2301 even in a case where a user presses a portion closer to the outer circumferential portion 2131E of the second control button 2120E downward, and the overhanging portion 2132E on the opposite side is urged upward.

In addition, the type-E second control button 2120E has the engagement portion 2128E (first engagement portion) at a position closer to the outer circumferential edge 2121E of the type-E second control button 2120E. At the second control button 2120E, the engagement portion 2128E is provided at a position closer to a side opposite to the overhanging portion 2132E. The base member 2310 included in the button receiving portion 2301 has an engagement portion 2315. The engagement portion 2315 of the button receiving portion 2301 is formed under the wall portion 2313 (see FIG. 22B). In a state where the second control button 2120E is attached to the button receiving portion 2301, the engagement portion 2128E of the second control button 2120E is caught by the engagement portion 2315 of the base member 2310. Thereby, it is possible to prevent the type-E second control button 2120E from being detached from the button receiving portion 2301. Particularly, at the type-E second control button 2120E, the engagement portion 2128E is caught by the button receiving portion 2301 at a position closer to the outer circumferential portion 2131E. Because of this, it is possible to effectively prevent the type-E second control button 2120E from being detached from the button receiving portion 2301 even in a case where a user presses downward the overhanging portion 2132E protruding significantly from the first control button 2110, and the outer circumferential portion 2131E on the opposite side is urged upward.

As depicted in FIG. 25, the outer circumferential portion 2131E of the second control button 2120E is provided with the movable portion 2129E. When a user presses the movable portion 2129E in a direction toward the inner circumferential edge 2122, the engagement portion 2128E of the second control button 2120E moves from a lock position, which is the initial position depicted in FIG. 25, to an unlock position (a position closer to the inner circumferential edge 2122 than the lock position is). The user can disengage the engagement portion 2128E of the second control button 2120E and the engagement portion 2315 of the base member 2310 by pressing the movable portion 2129E. When a user moves up the outer circumferential edge 2121E of the second control button 2120E upward in this state, the engagement portion 2342 of the shaft member 2340 is pressed by the second control button 2120E, and moves to the unlock position, and it becomes possible to remove the second control button 2120E from the button receiving portion 2301.

As depicted in FIG. 25, an inclined surface 2135E extending downward and in the direction toward the central portion of the body 2100 from the outer edge of the outer surface of the movable portion 2129E provided to the outer circumferential edge 2121A of the type-E second control button 2120A is formed on the outer surface. When a user presses the inclined surface 2135E, the second control button 2120E moves upward and in a diagonal direction toward the middle portion of the body 2100. Due to the movement of the second control button 2120E toward the middle portion of the body 2100, the second control button 2120E can press the engagement portion 2342 of the shaft member 2340, and it becomes possible to remove the second control button 2120E from the button receiving portion 2301. That is, by forming the inclined surface 2135E on the movable portion 2129E of the second control button 2120E, it becomes possible to disengage the two engagement portions 2128E and 2342 and the second control button 2120E by a series of operation of pressing the movable portion 2129E, and it becomes easier to remove the second control button 2120E.

As depicted in FIG. 23, the type-A second control button 2120A is not provided with an engagement portion to engage with the engagement portion 2315 of the base member 2310. At the second control button 2120A, a guided slope 2133A to be guided by the wall portion 2313 (see FIG. 22A and FIG. 22B) of the base member 2310 is formed on the outer circumferential surface of a fitting projection portion 2125. The guided slope 2133A is inclined from an outer edge (an outer edge closer to the outer circumferential edge 2121A) of the fitting projection portion 2125A downward and in a direction toward the inner circumferential edge 2122A.

As depicted in FIG. 22A, a guide slope 2314 extending downward and in a direction toward the second fitting portion 2303 is formed inside the wall portion 2313 surrounding the second fitting portion 2303 at the top surface portion of the base member 2310. Since the guided slope 2133A formed at the fitting projection portion 2125A of the second control button 2120A abuts on the guide slope 2314, and slides along the guide slope 2314, the fitting projection portion 2125A can be guided to the inside of the wall portion 2313. Thereby, it is possible to make it easier to attach the type-A second control button 2120A to the button receiving portion 2301. In addition, guided slopes 2133B to 2133E are formed also at the fitting projection portions 2125B to 2125E of the type-B to type-E second control buttons 2120B to 2120E. Thereby, it is possible to make it easier to attach the type-B to type-E second control buttons 2120A also to the button receiving portions 2301.

As depicted in FIG. 17B, the first fitting portion 2126A is formed at the central portion of the fitting projection portion 2125A. A wall surface 2134A is formed at the first fitting portion 2126A. The wall surface 2134A of the first fitting portion 2126A is a surface perpendicular to the bottom surface of the fitting projection portion 2125A. The wall surface 2134A of the first fitting portion 2126A may be a surface closer to a plane perpendicular to the bottom surface of the fitting projection portion 2125A than the guided slope 2133A is. As depicted in FIG. 22A, the second fitting portion 2303 (second fitting portion) protruding upward is formed at the central portion of the button receiving portion 2301. A wall surface 2304 is formed also at the second fitting portion 2303. The wall surface 2304 of the second fitting portion 2303 is a surface perpendicular to the bottom surface of the button receiving portion 2301 (the bottom surface of the fitting recess portion 2302). The wall surface 2304 of the second fitting portion 2303 may be a surface closer to a plane perpendicular to the bottom surface of the button receiving portion 2301 than the guide slope 2314 is.

When the second control button 2120A has been attached to the button receiving portion 2301, the wall surface 2134A of the first fitting portion 2126A abuts on the wall surface 2304 of the second fitting portion 2303. Thereby, it is possible to prevent the second control button 2120A from moving along the bottom surface of the button receiving portion 2301 (the bottom surface of the fitting recess portion 2302). In addition, wall surfaces 2134B to 2134E are formed also at the recess portions 2126B to 2126E of the fitting projection portions 2125B to 2125E of the type-B to type-E second control buttons 2120B to 2120E. Thereby, it is possible to prevent also the type-B to type-E second control buttons 2120B to 2120E from moving along the bottom surfaces of the button receiving portions 2301.

FIG. 26A is a perspective view of a mark member 2400 attached to a second control button 2120. FIG. 26B is a side view of the mark member 2400. The mark member 2400 may be manufactured by using, as a material, a resin, a rubber material, or the like. As depicted in FIG. 14, the openings H1 are formed through the top surface portions of the plurality of second control buttons 2120 (e.g. the top surface portion 2123A of the type-A second button 2120A). The mark member 2400 can be attached to and removed from the opening H1 of a second control button 2120.

As depicted in FIG. 26A, the mark member 2400 has a top portion 2401 representing a mark which is characters, numerals, symbols, or a string which is a combination of these. In addition, as depicted in FIG. 26B, the mark member 2400 has a fitting projection portion 2403 that protrudes downward from the top portion 2401, and engages with the opening H1 of the second control button 2120. Whereas the top portion 2401 has a circular shape in the example depicted in FIG. 26A, the shape of the top portion 2401 may be a rectangular shape such as a square shape, or may be another shape. In the example depicted in FIG. 26A, a symbol "circle" is provided as identification information on the top portion 2401. The identification information is not limited to symbols but may be numerals (Arabic numerals or Roman numerals), or may be other types of character. Identification information which is of a different type from that of the identification information display portion 2111 formed on the first control button 2110 may be provided to the top portion 2401 of the mark member 2400. In addition, the identification information provided to the top portion 2401 may be formed as braille patterns or by embossing so as to allow a user to identify the identification information by touching it.

The mark member 2400 can be attached to the inside of the opening H1 of the second control button 2120, and can be removed from the opening H1. The fitting projection portion 2403 of the mark member 2400 has a first extending portion 2403a and a second extending portion 2403b that extend downward with the same length, and have lower ends which are formed as flanges, and the clearance D2 in the widthwise direction of the mark member 2400 is formed between the first extending portion 2403a and the second extending portion 2403b. Due to warping of the first extending portion 2403a and the second extending portion 2403b in directions toward the clearance D2, the overall width of the fitting projection portion 2403 narrows. Thereby, a user can put in the fitting projection portion 2403 inside the opening H1 formed through the top surface portion of the second control button 2120, and can pull out the fitting projection portion 2403 from the opening H1.

FIG. 27 is a perspective view depicting the type-A second control button 2120A having a mark member 2400 is attached thereto. FIG. 28 is a perspective view depicting the type-E second control button 2120E having a mark member 2400 attached thereto. As depicted in FIG. 15, at each second control button 2120, the opening H1 is formed at a position closer to an edge portion of the top surface portion of the second control button 2120 than to the central portion of the top surface portion. Because of this, as depicted in FIG. 27 and FIG. 28, a mark member 2400 can be attached to and detached from a position closer to the edge portion of the top surface portion of the second control button 2120 than to the central portion of the top surface portion. With this configuration, it becomes easier to press the central portion of the top surface portion of the second control button 2120.

The second control button 2120 has an outer circumferential portion 2121 extending outward beyond the outer circumferential edge C1 of the body 2100. As depicted in FIG. 27 and FIG. 28, at least a portion of the top portion 2401 of a mark member 2400 overlaps a portion of the outer circumferential portion 2121 of a second control button 2120. A user can sense that she/he is touching a portion near the outer circumferential edge 2121E of a second control button, she/he is touching the central portion of the second control button 2120 in the widthwise direction, and so on, by touching the mark member 2400 during control of the second control button 2120. Thereby, it becomes easier for the user to check that a finger or the like is placed at a certain home position.

In addition, as depicted in FIG. 27 and FIG. 28, the top portion 2401 of a mark member 2400 is circular, and a portion of the outer circumferential edge of the top portion 2401 overlaps a portion of the outer circumferential edge 2121 of a second control button 2120. With this configuration, it is possible to make it easier for a user to put in a fingertip (a claw tip) or the like between the top portion 2401 of the mark member 2400 and the second control button 2120, and remove the mark member 2400 from the second control button 2120. The top portion 2401 of the mark member 2400 may have a portion extending outward from the second control button 2120 beyond the outer circumferential edge 2121 of the second control button 2120. In addition, the outer edge of the top portion 2401 of the mark member 2400 may have a portion overlapping the inner circumferential edge 2122 of the second control button 2120. With this configuration also, it is possible to make it easier to remove the mark member 2400.

As depicted in FIG. 27 and FIG. 28, the top portion 2401 of a mark member 2400 has a bottom surface portion 2402 facing the top surface portion of a second control button 2120 in a state where the mark member 2400 is attached to the second control button 2120. The top surface portion 2123A of the type-A second button 2120A depicted in FIG. 27 is slightly curved in the upward/downward direction. In addition, the top surface portion 2123E of the type-E second button 2120E depicted in FIG. 28 also is slightly curved in the upward/downward direction. In contrast to these, the bottom surface portion 2402 of the mark member 2400 is flat in the upward/downward direction. Thereby, a slight clearance is created between the top surface portion of a second control button 2120 and the bottom surface portion 2402 of the mark member 2400. A user can put in a fingertip or the like to the clearance. Thereby, it is possible to make it easier to remove the mark member 2400 from the second control button 2120.

The mark member 2400 depicted in FIG. 28 is different from the mark member 2400 depicted in FIG. 27 in which the symbol "circle" is provided at the top portion 2401, in that a symbol "square" is provided at the top portion 2401 of the mark member 2400 depicted in FIG. 28. A user can attach mark members 2400 provided with desired identification information to the plurality of second control buttons 2120. The user can attach, to the second control buttons 2120, mark members 2400 provided with marks corresponding to functions set in an application (e.g. a game application) executed by an information processing apparatus such as a console or a server. By checking the mark members 2400 attached to the second control buttons 2120, the user can recognize the functions of the second control buttons 2120 in the application. In addition, the user changes the arrangement of the plurality of second control buttons 2120, and changes assignment of the switches of button receiving portions 2301 corresponding to functions in an application, in some cases. In such a case also, by changing mark members 2400 attached to the second control buttons 2120, it is possible to prevent differences from being generated between functions set in an application and functions represented by the marks of the mark members 2400.

(1-1) As mentioned above, an input device explained in the present embodiment includes a body, a first control button having a top surface portion for placing a hand and attached to the body, and a plurality of second control buttons arranged along an outer edge of the first control button and attached to the body. The plurality of second control buttons have outer circumferential portions extending outward beyond an outer circumferential edge of the body. This can make control of the input device comfortable for users who have difficulty in feeling comfortable controlling existing input devices.
(1-2) An input device explained in the present embodiment includes a body, a first control button attached to the body for placing a hand, and a plurality of second control buttons arranged along an outer edge of the first control button and attached to the body. A top surface portion of each of the plurality of second control buttons is arranged above an extended line along a top surface portion of the first control button. This can make control of the input device comfortable for users who have difficulty in feeling comfortable controlling existing input devices.
(1-3) In the input device according to (1-1) or (1-2) described above, the plurality of second control buttons may be able to be attached to and removed from the body. For example, a user can choose a desired second control button from multiple types of the second control buttons, and attach it to the body. In addition, since the outer circumferential portions of the second control buttons extend outward from the body beyond the outer edge of the body, the user can hook the outer circumferential portion of a second control button with her/his fingertip, the back of her/his hand, or the like, and remove the second control button.
(1-4) In the input device according to (1-3) described above, the body may have an engagement portion engaged with each of the plurality of second control buttons. In a state where the second control button is attached to the body, the engagement portion may be arranged between the first control button and the second control button, and be in contact with the second control button. The engagement portion may be able to move between a lock position where the engagement portion is engaged with the second control button, and an unlock position positioned closer to the first control button than to the lock position. A user can remove a second control button from the body easily by moving up the outer circumferential edge of the second control button.
(1-5) In the input device according to (1-4) described above, the body may have a shaft member that can rotate about an axis crossing an upward/downward direction and a direction toward a central portion of the body. The engagement portion may be formed on the shaft member.
(1-6) In the input device according to (1-4) or (1-5) described above, the plurality of second control buttons may have inclined surfaces extending below outer circumferential portions of the second control buttons and in a direction toward a central portion of the body. When a user presses the inclined surface of a second control button, this moves the second control button in the direction toward the central portion of the body, presses the engagement portion toward the second control button, and moves the engagement portion to the unlock position. Thereby, it becomes possible to remove the second control button from a button receiving portion.
(2-1) An input device explained in the present embodiment includes a body having a switch and a button receiving portion for pressing the switch, a control button attached to the button receiving portion by magnetic force, a first magnetic structure provided to one of the button receiving portion and the control button, and including at least two magnetic poles separated in a first direction, and a second magnetic structure provided to the other one of the button receiving portion and the control button, and including a magnetic material or a magnet facing the at least two magnetic poles. The control button is positioned in a second direction crossing the first direction relative to the at least two magnetic poles, and has a first engagement portion engaged with the button receiving portion. This makes it possible to attract a second control button to the button receiving portion by magnetic force, and also correct the posture of the second control button, and the work to attach the second control button to the button receiving portion becomes easier. In addition, it is possible to prevent the second control button from being detached from the body when the second control button is pressed down on a side opposite to a side where the engagement portion is provided.
(2-2) In the input device according to (2-1) described above, the control button may be able to be pressed down in a third direction crossing the first direction and the second direction.
(2-3) In the input device according to (2-2) described above, the first magnetic mechanism may include a magnet. The third direction may be a direction in which the magnetic poles of the magnet included in the first magnetic mechanism are separated.
(2-4) In the input device according to any one of (2-1) to (2-3) described above, the control button may extend beyond an outer circumferential edge of the button receiving portion in a direction opposite to a direction in which the first engagement portion is positioned relative to the at least two magnetic poles. It is possible to prevent the second control button from being detached from the button receiving portion even in a case where a user presses down a portion of the second control button extending beyond the outer circumferential edge of the button receiving portion since the engagement portion is engaged with the button receiving portion at a position on the opposite side.
(2-5) In the input device according to (2-1) or (2-4) described above, the control button may have a first portion which is on a side where the first engagement portion is provided relative to the at least two magnetic poles, and a second portion which is a portion on a side opposite to the first portion relative to the at least two magnetic poles. A width of the second portion in the second direction may be greater than a width of the first portion. Since the second control button is engaged with the button receiving portion at the first portion provided with the engagement portion, it is possible to prevent the first portion from being separated from the button receiving portion, and it is possible to prevent the second control button from being detached from the button receiving portion, when a user pressed the second portion.
(2-6) The first magnetic structure in any one of (2-1) to (2-5) described above may further include at least one U-shaped magnetic material. The at least one magnet may be arranged at a recess portion of the at least one U-shaped magnetic material. This can enhance the force of the magnet to attract the magnetic material. In addition, the number of magnets to be arranged at the button receiving portion can be reduced.
(2-7) In the input device according to any one of (2-1) to (2-6) described above, the control button may have a fitting projection portion including the first magnetic structure or the second magnetic structure. The button receiving portion may have a fitting recess portion that receives the fitting projection portion. A guided slope may be formed on an outer circumferential surface of the fitting projection portion. This makes it possible to guide the fitting projection portion of the second control button to the fitting recess portion of the button receiving portion, and it is possible to make it easier to attach the second control button to the button receiving portion.
(2-8) In the input device according to any one of (2-1) to (2-7) described above, the control button may have, at the fitting projection portion, a first fitting portion which is a projection portion protruding toward the button receiving portion or a recess portion which is recess in a direction away from the button receiving portion. The button receiving portion may have a second fitting portion to which the first fitting portion fits, and which is a projection portion protruding toward the control button or a recess portion which is recess in the direction away from the control button. An outer circumferential surface of the first fitting portion may have a perpendicular surface or a surface which is closer to a perpendicular plane than the guided slope is. This can prevent the second control button from moving along the bottom surface of the button receiving portion when the second control button is being attached.
(2-9) In the input device according to any one of (2-1) to (2-8) described above, the body may have a cover member including an opening through which the button receiving portion is exposed upward. The button receiving portion may be, at a central portion thereof, urged upward by the switch. An outer edge portion of the button receiving portion may abut on the cover member. This makes it becomes possible to control the switch by pressing either of both one end portion of the button receiving portion and the other end portion of the button receiving portion.
(2-10) A control button explained in the present embodiment is a control button attached to a body by magnetic force, the control button having a first magnetic structure having at least two magnetic poles that are separated in a first direction or a second magnetic structure including a magnetic material or a magnet that faces the at least two magnetic poles, and a first engagement portion that is positioned in a second direction crossing the first direction relative to the at least two magnetic poles, and engages with the body. This makes the second control button attracted to the body by the magnetic force, and accordingly the work to attach the second control button to the body becomes easier.
(3-1) An input device explained in the present embodiment includes a body, a first control button attached to the body, and a second control button attached to the body at a position different from the first control button. The first control button has a first top surface portion which serves as a control portion to be controlled by a user. The second control button has a second top-surface portion that serves as a control portion to be controlled by the user, and has, at a portion of the second top-surface portion, an overhanging portion that covers a portion of the first top surface portion. This can make control of the input device comfortable for users who have difficulty in feeling comfortable controlling existing input devices.
(3-2) In the input device according to (3-1) described above, the second control button may be a press button. A clearance which is larger than a press amount of the second control button may be provided between a bottom surface of the overhanging portion and the first top surface portion. This can prevent the second control button from interfering with the first control button when the second control button is pressed down.
(3-3) The input device according to (3-1) or (3-2) described above may have a plurality of buttons arranged along an outer edge of the first control button and attached to the body. Some buttons of the plurality of buttons may be the second control button. This can ensure that there is an exposed region of the top surface of the first control button inside a plurality of the second control buttons.
(3-4) In the input device according to (3-1) to (3-3) described above, the body may have a button receiving portion to which the second button is attached. The second control button may have an outer circumferential portion extending outward beyond an outer circumferential edge of the body. A width of the overhanging portion may be narrower than a width of the outer circumferential portion. With this configuration, the layout of the control buttons on the body becomes easier.
(3-5) In the input device according to (3-3) described above, the plurality of buttons may be able to be attached to and removed from the body. For example, a user can change the arrangement of a plurality of buttons including the second control button on the body.
(3-6) In the input device according to any one of (3-1) to (3-5) described above, the body may have a switch, and a button receiving portion for pressing the switch. The second control button may have a first engagement portion that engages with the button receiving portion. At the second control button, the first engagement portion may be provided at a position closer to a side opposite to the overhanging portion. This can prevent a portion of the second control button closer to the side opposite to the overhanging portion of the second control button from being detached from the button receiving portion when a user pressed down the overhanging portion.
(3-7) In the input device according to (3-6) described above, the second control button may have an outer circumferential portion extending outward beyond an outer circumferential edge of the body. The second control button may have a second engagement portion that engages with the button receiving portion at a position on the second control button closer to the overhanging portion. This can prevent a portion of the second control button closer to the overhanging portion from being detached from the button receiving portion when a user pressed down a portion of the second control button closer to the outer circumferential portion.
(3-8) In the input device according to (3-6) or (3-7) described above, the second control button may have, at the outer circumferential portion, a movable portion for disengaging the first engagement portion. It becomes possible for a user to disengage the engagement portion from the button receiving portion, and remove the second control button by moving the movable portion.
(3-9) In the input device according to any one of (3-1) to (3-8) described above, the first control button may be provided at a central portion of the body. The overhanging portion may overhang toward the central portion of the body. The second control button may have an outer circumferential portion extending outward beyond an outer circumferential edge of the body. This can make the second control button larger in a plan view, and make it easier for a user to press the second control button.
(3-10) A second control button explained in the present embodiment is a control button attached to a body, and having a top surface portion for pressing by a hand, and has, at a portion of the top surface portion, an overhanging portion that is attached to the body, is formed on another control button, and covers a portion of the top surface portion for placing a hand. This can make control of an input device comfortable for users who have difficulty in feeling comfortable controlling existing input devices.
(4-1) An input device explained in the present embodiment includes a body, a plurality of control buttons attached to the body, and having top surface portions that can be press-controlled downward, and mark members that have top portions expressing marks for a user to recognize functions assigned to the plurality of control buttons, and can be attached to and removed from the plurality of control buttons. Each of the plurality of control buttons has an opening formed through the top surface portion. The mark members have fitting projection portions that protrude downward from the top portions, and fit to the openings. This allows a user to grasp functions assigned to the second control buttons by checking the marks expressed by the mark members. In addition, it becomes possible for a user to grasp a correct function assigned to a second control button by replacing the mark member of the second control button even in a case where the function of the second control button is changed in an application.
(4-2) An input device explained in the present embodiment includes a body, a plurality of control buttons attached to the body, and having top surface portions that can be press-controlled downward, and mark members that have top portions expressing marks for a user to recognize functions assigned to the plurality of control buttons, and can be attached to and removed from the plurality of control buttons. The mark members can be attached to and detached from positions closer to edge portions of the top surface portions than to central portions of the top surface portions. This allows a user to grasp functions assigned to the second control buttons by checking the marks expressed by the mark members. In addition, since the mark members are attached to the positions closer to the edge portions of the top surface portions of the second control buttons than to the central portions of the top surface portions, it becomes easier for a user to press down the central portions of the top surface portions of the second control buttons.
(4-3) In the input device according to (4-1) or (4-2) described above, the plurality of control buttons may be able to be attached to and removed from the body. It becomes possible for a user to grasp a correct function assigned to a second control button by replacing the mark member of the second control button even in a case where the user changed the arrangement of the second control buttons on the body.
(4-4) In the input device according to any one of (4-1) to (4-3) described above, portions of outer circumferential edge of the top portions may overlap portions of outer circumferential edges of the control buttons. This can make it easier to put in a fingertip or the like between the top portions of the mark members and the second control buttons, and to remove the mark members from the second control buttons.
(4-5) In the input device according to any one of (4-1) to (4-4) described above, the top portions may have bottom surface portions facing the top surface portions in a state where the mark members are attached to the control buttons. The top surface portions may be curved in an upward/downward direction. The bottom surface portions may be flat in the upward/downward direction. This can form clearances between the top portions of the mark members and the second control buttons, and can make it easier to remove the second control buttons from the mark members.
(4-6) In the input device according to any one of (4-1) to (4-5) described above, the plurality of control buttons may have outer circumferential portions extending outward beyond an outer circumferential edge of the body. At least portions of the top portions may overlap portions of the outer circumferential portions. This allows a user to sense that she/he is touching a portion near the outer circumferential portion of a second control button by touching the mark member during control of the second control button.

Although particular embodiments are depicted, and explained in detail in the present specification, it will be understood that subject matters encompassed by the present invention are limited only by claims.

## Claims

1. An input device comprising:
a body;
a first control button having a top surface portion for placing a hand and attached to the body; and
a plurality of second control buttons arranged along an outer edge of the first control button and attached to the body, wherein
the plurality of second control buttons have outer circumferential portions extending outward beyond an outer circumferential edge of the body.

2. An input device comprising:
a body;
a first control button attached to the body for placing a hand; and
a plurality of second control buttons arranged along an outer edge of the first control button and attached to the body, wherein
a top surface portion of each of the plurality of second control buttons is arranged above an extended line along a top surface portion of the first control button.

3. The input device according to claim 1 or 2, wherein the plurality of second control buttons are attached to and removed from the body.

4. The input device according to claim 3, wherein
the body has an engagement portion engaged with each of the plurality of second control buttons,
in a state where the second control button is attached to the body, the engagement portion is arranged between the first control button and the second control button, and is in contact with the second control button, and
the engagement portion moves between a lock position where the engagement portion is engaged with the second control button, and an unlock position positioned closer to the first control button than to the lock position.

5. The input device according to claim 4, wherein
the body has a shaft member that rotates about an axis crossing an upward/downward direction and a direction toward a central portion of the body, and
the engagement portion is formed on the shaft member.

6. The input device according to claim 4, wherein the plurality of second control buttons have inclined surfaces extending below outer circumferential portions of the second control buttons and in a direction toward a central portion of the body.
